# FASCICULE DE BREVET EUROPEEN

(11) **EP 3 917 870 B1**
(45) Date de publication et mention de la délivrance du brevet: **29.11.2023**
(21) Numéro de dépôt: 20702623.8
(22) Date de dépôt: 29.01.2020
(51) Int. Cl.: B66F 9/24, B66F 11/04, B66F 9/075, B60K 1/02, B60K 6/46, B60L 50/61, B60L 50/15

(54) **NACELLE ELEVATRICE APTE A UNE UTILISATION EN INTERIEUR ET EN EXTERIEUR TOUT-TERRAIN**
HEBEGONDEL GEEIGNET FÜR INNEN-UND GELÄNDEBETRIEB
ELEVATING NACELLE SUITABLE FOR INDOOR AND ALL-TERRAIN OUTDOOR USE

(30) Priorité: 29.01.2019 FR 1900809; 25.10.2019 FR 1911996
(43) Date de publication de la demande: 08.12.2021
(60) Demande divisionnaire: 23195549.3
(73) Titulaire: Haulotte Group, 42420 Lorette (FR)
(72) Inventeur: DI FLORIO, Laurent, 69700 GIVORS (FR); DORAY, Jean-Baptiste, 38670 CHASSE-SUR-RHÔNE (FR); DEVAUX, Christian, 42000 SAINT-ETIENNE (FR)
(74) Mandataire: Reinhardt, Yves
(86) Numéro de dépôt international: PCT/EP2020/052094
(87) Numéro de publication internationale: WO 2020/157094

(56) Documents cités:
- EP-A1- 1 967 486
- EP-A2- 0 921 094
- WO-A1-2014/045778
- WO-A2-98/33672
- DE-A1-102011 011 733
- JP-A- 2012 001 889
- JP-U- S60 144 525
- US-A1- 2017 174 086
- US-B2- 9 809 182

## Description

La présente invention concerne le domaine des plates-formes élévatrices mobiles de personnel (désignées aussi par l'acronyme PEMP, ou encore en anglais par *mobile elevating work platforms* et son abréviation *MEWP*) encore communément appelées nacelles élévatrices (ou en anglais *aerial work platforms* ou son abréviation *AWP*)*.* L'invention concerne notamment une nacelle élévatrice apte à une utilisation tout-terrain en extérieur.

Les nacelles élévatrices sont des machines destinées à permettre à une ou plusieurs personnes de travailler en hauteur. Pour cela, elles comprennent une plate-forme de travail prévue pour recevoir une ou plusieurs personnes. Elle est supportée par un mécanisme de levage qui permet de l'élever depuis une position abaissée sur le châssis de la nacelle élévatrice jusqu' à la position de travail souhaitée en hauteur. Le mécanisme de levage est généralement actionné par un circuit hydraulique.

Il existe des nacelles élévatrices automotrices prévues pour une utilisation extérieure tout-terrain. Celles-ci évoluent sur des chantiers ou d'autres lieux extérieurs souvent dépourvus d'accès à un réseau d'alimentation électrique ou ne procurant qu'un temps d'accès limité à celui-ci. Pour cette raison, elles sont habituellement mues par un moteur à combustion interne et sont dotées d'un réservoir à carburant assurant une autonomie de travail acceptable, le ravitaillement en carburant pouvant le cas échéant se faire sur le lieu d'intervention de la nacelle élévatrice. Le moteur à combustion interne entraine une ou plusieurs pompes hydrauliques du circuit hydraulique assurant l'actionnement du mécanisme de levage de la plate-forme de travail et l'alimentation d'une motorisation hydraulique servant à entraîner des roues de la nacelle élévatrice aux fins de translation au sol.

Un inconvénient de ce type de nacelle élévatrice est la pollution environnementale et sonore due respectivement aux rejets de gaz d'échappement du moteur à combustion interne et au bruit de ce dernier.

Un autre inconvénient de ce type de nacelles élévatrices est qu'elles ne sont pas utilisables à l'intérieur des bâtiments en raison précisément des rejets de gaz d'échappement et du bruit du moteur à combustion interne.

En sens inverse, il existe des nacelles élévatrices électriques développées spécifiquement pour un usage à l'intérieur des bâtiments. La force motrice pour les différents mouvements est fournie par des moteurs électriques alimentés par une ou plusieurs batteries électriques rechargeables. Plus particulièrement, chaque roue de la nacelle élévatrice est équipée d'un moteur électrique aux fins de la translation au sol et un autre moteur électrique est dédié à l'actionnement d'une pompe hydraulique d'un circuit hydraulique servant à l'actionnement du mécanisme de levage de la plate-forme de travail. De ce fait, ces nacelles élévatrices sont respectueuses de l'environnement et silencieuses. La nacelle élévatrice est en outre équipée d'un chargeur monophasé pour recharger la ou les batteries par branchement sur le réseau d'alimentation secteur monophasé. L'opération de charge des batteries a généralement lieu pendant toute la nuit de manière que la nacelle élévatrice soit utilisable le lendemain avec une autonomie correspondant à au moins une journée de travail.

Mais ces nacelles élévatrices électriques ne sont pas conçues pour une utilisation extérieure tout-terrain. En effet, elles ne sont pas aptes au franchissement d'obstacles, notamment eu égard à leur faible garde au sol, à la puissance insuffisante des moteurs électriques entraînant les roues et au positionnement de ces moteurs les exposant aux chocs dans un environnement tout-terrain. Elles ne sont pas non plus conçues pour assurer une stabilité suffisante en extérieur, par exemple lorsque le terrain n'est pas plat et horizontal, du point de vue de l'empattement et en raison de l'absence de pieds stabilisateurs. De plus, leur autonomie est insuffisante du fait que les nacelles élévatrices prévues pour une utilisation extérieure tout-terrain sont plus consommatrices d'énergie, notamment parce qu'elles requièrent une motorisation plus puissante aux fins de franchissement d'obstacles et qu'elles disposent aussi d'organes auxiliaires tels que des pieds stabilisateurs qu'il convient d'actionner. Cela est d'autant plus le cas en l'absence d'accès à un réseau d'alimentation électrique sur leur lieu d'intervention, ou encore d'un temps d'accès limité à celui-ci ne permettant par une recharge suffisante.

Plus généralement, il existe un préjugé technique selon lequel les nacelles élévatrices électriques, dépourvues de moteur à combustion interne, ne sont pas adaptables à un usage tout-terrain en extérieur essentiellement du fait d'une autonomie de travail jugée insuffisante eu égard, d'une part, à la taille des batteries électriques rechargeables qu'il est possible d'installer sur la nacelle élévatrice et, eu égard, d'autre part, à leur besoin accru de puissance, aux conditions environnementales variables, notamment en termes de température, qui sont défavorables aux batteries électriques, ainsi qu'une accessibilité insuffisante à un réseau d'alimentation électrique pour recharger les batteries. Ce préjugé technique est encore renforcé dans le cas des nacelles élévatrices à ciseaux lesquelles sont souvent placées à un endroit d'utilisation donné sur un chantier sur une période longue dépassant une ou plusieurs journées. En effet, déplacer la nacelle élévatrice aux fins de recharger les batteries impliquerait ensuite de repositionner la nacelle élévatrice au même endroit, ce qui est synonyme de perte de temps et d'énergie pour les utilisateurs.

Plus récemment, il a été proposé des nacelles élévatrices à motorisation hybride, c'est-à-dire doté d'une motorisation électrique et d'un moteur à combustion interne. Ce type de nacelle élévatrice est utilisable en intérieur grâce à la motorisation électrique et en extérieur en utilisant le moteur à combustion interne. Les deux moteurs peuvent éventuellement être couplés en tandem pour fournir un à-coup de puissance dans certaines circonstances. Un exemple d'une telle nacelle élévatrice est divulgué par EP 1 967 486 A1. Mais ces nacelles élévatrices à motorisation hybride ont aussi pour inconvénient d'être une source de pollution environnementale et sonore liée au moteur à combustion interne.

EP0921094A2 divulgue une nacelle élévatrice selon le préambule de la revendication 1.

Dans le cadre de l'invention, un objectif est de fournir une nacelle élévatrice limitant sensiblement les inconvénients précités. En particulier, un objectif est de proposer une nacelle élévatrice pouvant être utilisée en tout-terrain à l'extérieur tout en limitant sensiblement la pollution environnementale et sonore. A cette fin, il est proposé une nacelle élévatrice selon la revendication 1.

La nacelle élévatrice est ainsi plus respectueuse de l'environnement et silencieuse du fait qu'elle utilise exclusivement des moteurs électriques pour fournir les forces motrices nécessaires à la translation de la nacelle élévatrice au sol et à l'actionnement du mécanisme de levage. De ce fait, la nacelle élévatrice peut aussi être utilisée non seulement en extérieur, mais aussi à l'intérieur d'un bâtiment. De plus, les moteurs électriques ont un meilleur rendement énergétique que les moteurs à combustion interne et ne présentent pas de risque de fuite de fluide hydraulique comme dans le cas de moteurs hydrauliques. Le fait que les roues de la nacelle élévatrice soient montées sur un pont avant et un pont arrière permet d'adapter la nacelle élévatrice à une utilisation tout-terrain en extérieur, étant donné leur robustesse et fiabilité et le fait que le ou les premiers moteurs électriques ne sont pas placés au niveau des roues, étant précisé que la puissance fournie par le ou les premiers moteurs électriques est choisie de façon appropriée. Si en utilisation, l'autonomie de la ou des batteries s'avérait insuffisante sans qu'un réseau d'énergie électrique approprié soit disponible, un groupe électrogène peut être monté sur la nacelle élévatrice à l'emplacement prévu afin de recharger la ou les batteries rechargeables, ce qui permet d'accroître l'autonomie d'utilisation de la nacelle élévatrice. Plus généralement, ses composants électriques et autres sont avantageusement choisis de manière à réduire la consommation d'énergie laquelle peut en outre être optimisée par une électronique de commande à bord de la nacelle élévatrice. L'invention a donc surmonté le préjugé technique selon lequel il n'est pas possible de développer des nacelles élévatrices électriques, dépourvues de moteur à combustion interne, pour un usage tout-terrain en extérieur.

Le montage du groupe électrogène sur la nacelle élévatrice est de nature amovible, l'emplacement de la nacelle élévatrice prévu pour le recevoir étant lui-même préférentiellement aménagé pour faciliter la mise en place et le retrait de celui-ci. Ainsi, le groupe électrogène peut selon les besoins être montés sur ou enlevés de la nacelle élévatrice notamment par l'utilisateur final, par exemple sur un chantier, ou bien par une société de location de nacelle élévatrices, par exemple en fonction des souhaits de ses clients. Le montage amovible du groupe électrogène sur la nacelle élévatrice a en effet plusieurs avantages. Il est ainsi possible de commercialiser la nacelle élévatrice sans le groupe électrogène si l'utilisateur envisage exclusivement une utilisation pour laquelle l'autonomie de sa ou ses batteries est suffisante, par exemple pour une utilisation exclusivement en intérieur ou extérieur où un réseau électrique est disponible en permanence ou quasi-permanence. De plus, un groupe électrogène peut toujours être adjoint à la nacelle élévatrice si son utilisation devait ultérieurement se faire dans un environnement dépourvu d'un accès suffisant à une source extérieure d'alimentation électrique. Par ailleurs, cela permet de partager l'utilisation d'un même groupe électrogène entre plusieurs nacelles élévatrices prévues pour le recevoir de façon amovible. Par exemple, une société de location peut gérer une flotte de nacelles élévatrices en ayant un nombre moindre de groupes électrogènes et mettre ces derniers à disposition de ses clients à la demande en tant qu'accessoire. Un autre avantage réside aussi dans le fait que la maintenance périodique du groupe électrogène est indépendante de la nacelle élévatrice qui reste opérationnelle pendant ce temps. Un autre avantage encore réside dans le fait que le groupe électrogène peut aussi être démonté de la nacelle élévatrice et utilisé à d'autres fins sur un chantier.

Selon un mode de réalisation particulièrement avantageux, il peut être prévu la possibilité d'équiper la nacelle élévatrice de deux ou trois chargeurs monophasés, ce qui fournit une souplesse de charge de la ou des batteries rechargeables selon qu'une source d'énergie électrique monophasée ou multiphasée, habituellement triphasée, est disponible. Lorsqu'une source d'énergie électrique monophasée appropriée est disponible, il peut être prévu d'y brancher un seul des chargeurs monophasés. Au contraire, lorsqu'une source d'énergie électrique multiphasée appropriée, en particulier triphasée, est disponible, chacun des chargeurs monophasés - s'il y en a deux ou trois - est préférentiellement branché sur l'une respective des phases, ce qui permet une charge sensiblement plus rapide de la ou des batteries que dans le cas précédent. De plus, cela permet d'équiper la nacelle élévatrice indifféremment d'un groupe électrogène monophasé ou triphasé. Par ailleurs, le recours à au moins deux, préférentiellement trois chargeurs monophasés plutôt qu'à par exemple un chargeur monophasé et un chargeur triphasé distinct est plus économique et moins encombrant. De plus, le recours à trois chargeurs monophasés pour connexion indifféremment à une source d'énergie électrique monophasée ou triphasée permet avantageusement de recourir à des chargeurs standards du commerce et évite de développer un chargeur spécifique adapté pour recevoir indifféremment en entrée une alimentation électrique monophasée ou triphasée.

Plus généralement, suivant des modes de réalisation préférés, la nacelle élévatrice comprend une ou plusieurs des caractéristiques suivantes :
- la nacelle élévatrice comprend trois emplacements prévus chacun pour recevoir un chargeur monophasé respectif, la nacelle élévatrice étant en outre prévue pour pouvoir brancher chaque chargeur monophasé reçu dans un emplacement à une phase respective et à un neutre d'un réseau d'alimentation électrique triphasé de manière à pouvoir charger l'au moins une batterie électrique rechargeable à partir du courant de deux ou trois phases du réseau d'alimentation électrique triphasé ;
- un chargeur monophasé respectif est reçu dans deux des emplacements ou dans les trois ;
- la nacelle élévatrice comprend trois chargeurs monophasés dimensionnés de manière à pouvoir charger l'au moins une batterie électrique rechargeable à 80% de sa capacité en moins de 3 h lorsqu'ils sont branchés à un réseau d'alimentation triphasé approprié ;
- la nacelle élévatrice comprend en outre un circuit hydraulique servant à actionner le mécanisme de levage et comprenant au moins une pompe hydraulique, dans laquelle l'au moins un deuxième moteur électrique sert à entraîner l'au moins une pompe hydraulique ;
- le circuit hydraulique comprend une seule pompe hydraulique ;
- l'au moins une batterie électrique rechargeable, l'au moins un chargeur monophasé et le cas échéant les trois emplacements pour recevoir les chargeurs monophasés sont situés sur un premier côté latéral du châssis par rapport au mécanisme de levage, et l'au moins un deuxième moteur électrique, l'au moins une pompe hydraulique et l'emplacement prévu pour le montage du groupe électrogène sont situés sur un deuxième côté latéral par rapport au mécanisme de levage, le deuxième côté latéral étant de l'autre côté du châssis par rapport au premier côté latéral ;
- le pont avant et le pont arrière constituent chacun un pont de transmission servant à transmettre la force motrice de l'au moins un premier moteur électrique aux roues correspondantes ;
- la nacelle élévatrice comprend un seul premier moteur électrique ;
- la nacelle élévatrice comprend un seul deuxième moteur électrique ;
- l'au moins un premier moteur électrique et/ou l'au moins un deuxième moteur électrique sont des moteurs à courant alternatif fonctionnant à une tension nominale inférieure ou égale à 70 VCA, plus préférentiellement inférieure ou égale à 50 VCA, la nacelle élévatrice comprenant au moins un onduleur servant à alimenter l'au moins un premier et/ou l'au moins un deuxième moteur électrique à partir de l'au moins une batterie électrique rechargeable ;
- la tension nominale de l'au moins une batterie électrique rechargeable est inférieure ou égale à 100 VCC, plus préférentiellement inférieure ou égale à 50 VCC ;
- la nacelle élévatrice comprend un groupe électrogène apte à être monté de manière amovible à l'emplacement prévu à cet effet, et des moyens de raccordement électrique du groupe électrogène à au moins l'un des chargeurs monophasés, le groupe électrogène présentant de préférence un réservoir de carburant dont le volume permet de charger l'au moins une batterie électrique rechargeable à au moins 50 % de sa capacité ;
- la nacelle élévatrice comprend une électronique de bord prévue pour identifier le type de groupe électrogène et d'adapter la courbe de charge de l'au moins une batterie électrique rechargeable en fonction du type de groupe électrogène identifié ;
- la nacelle élévatrice comprend une électronique de bord prévue pour provoquer automatiquement la mise en route du groupe électrogène lorsque le niveau de charge de l'au moins une batterie électrique rechargeable passe en dessous d'un seuil prédéterminé ;
- la nacelle élévatrice comprend une électronique de bord configurée pour limiter les pics de puissance absorbés par l'au moins un premier et l'au moins un deuxième moteur électrique, et/ou pour limiter la puissance délivrée à l'au moins un premier moteur électrique et à l'au moins un deuxième moteur électrique en fonction d'au moins un paramètre de l'au moins une batterie électrique rechargeable tel qu'un état de vieillissement de l'au moins une batterie ou la température actuelle de l'au moins une batterie électrique rechargeable ;
- la nacelle élévatrice comprend en outre une prise électrique monophasée installée sur la plate-forme de travail, la nacelle élévatrice étant prévue pour alimenter la prise électrique monophasée par une ou plusieurs des possibilités suivantes :
   o le branchement à un réseau d'alimentation électrique monophasé,
   o l'alimentation par l'au moins une batterie électrique rechargeable via un onduleur dont est équipé la nacelle élévatrice, et
   o l'alimentation par le groupe électrogène ;
- la nacelle élévatrice comprend en outre une prise électrique triphasée installée sur la plate-forme de travail, la nacelle élévatrice étant prévue pour alimenter la prise électrique triphasée par branchement à un réseau d'alimentation électrique triphasé ou par le groupe électrogène ;
- le mécanisme de levage de la plate-forme de travail est du type à ciseaux.

Dans le contexte de la nacelle élévatrice ainsi proposé et décrite précédemment selon l'invention, et plus généralement concernant les nacelles élévatrices à motorisation électrique pouvant être équipées d'un groupe électrogène amovible, il est souhaitable de fournir une solution permettant une mise en place rapide et facile du groupe électrogène sur la nacelle élévatrice.

US 6,012,544 divulgue une solution de mise en place amovible d'un groupe électrogène sur une nacelle élévatrice. Elle consiste en un plateau support pour le groupe électrogène lequel plateau est pourvu de deux crochets permettant d'accrocher le plateau support en porte-à-faux au châssis par insertion des crochets dans deux fentes correspondantes du châssis. Une telle solution a néanmoins pour inconvénient que la mise en place du groupe électrogène sur le châssis est délicate puisqu'il faut que les crochets soient précisément alignés avec les fentes du châssis lors d'une opération de mise en place alors que le groupe électrogène est généralement lourd, plus de 100 kg, et déplacé le plus souvent par un chariot élévateur. De plus, il y a un risque que les crochets se désengagent des fentes du châssis par exemple lorsque la nacelle élévatrice se déplace sur un terrain accidenté.

Ainsi, selon un deuxième aspect ne faisant pas partie de la présente invention, un but est ainsi de fournir une solution de mise en place amovible d'un groupe électrogène sur une nacelle élévatrice permettant de pallier au moins en partie les inconvénients précités.

A cette fin, il est proposé une nacelle élévatrice, ne faisant pas partie de la présente invention, comprenant :
- une plate-forme de travail,
- un mécanisme de levage de la plate-forme de travail,
- au moins un moteur électrique destiné à fournir la puissance motrice pour déplacer la nacelle élévatrice au sol et/ou actionner le mécanisme de levage de la plate-forme de travail, cet actionnement étant préférentiellement opéré par le biais d'un circuit hydraulique incluant une pompe hydraulique entrainé par l'au moins un moteur électrique,
- au moins une batterie électrique rechargeable pour alimenter l'au moins un moteur électrique,
- au moins un chargeur servant à recharger l'au moins une batterie électrique rechargeable, et
- un emplacement d'accueil d'un groupe électrogène prévu pour le montage amovible d'un groupe électrogène destiné à alimenter l'au moins un chargeur et/ou l'au moins un moteur électrique,
dans laquelle :
- l'emplacement d'accueil est ouvert ou susceptible d'être ouvert sur un côté extérieur de la nacelle élévatrice pour permettre d'amener le groupe électrogène dans l'emplacement d'accueil et de l'en retirer suivant une direction d'amenée/retrait ;
- l'emplacement d'accueil comprend une structure de positionnement du groupe électrogène par coopération de forme avec une structure de positionnement complémentaire du groupe électrogène, qui est apte à corriger, lorsque le groupe électrogène est amené dans l'emplacement d'accueil, à la fois :
   - un défaut de centrage du groupe électrogène par rapport à l'emplacement d'accueil dans une direction horizontale perpendiculaire à la direction d'amenée/retrait, et
   - un défaut d'orientation angulaire du groupe électrogène dans un plan horizontal par rapport à la direction d'amenée/retrait ;
- l'emplacement d'accueil comprend au moins une butée pour positionner le groupe électrogène dans l'emplacement d'accueil dans la direction d'amenée/retrait ; et
- des moyens de fixation amovible pour maintenir fermement le groupe électrogène dans l'emplacement d'accueil et le libérer de manière à permettre le retrait du groupe électrogène de l'emplacement d'accueil.

Grâce à la structure de positionnement de l'emplacement d'accueil capable de coopérer comme mentionné avec la structure complémentaire du groupe électrogène, la mise en place du groupe électrogène dans celui-ci, notamment au moyen d'un chariot élévateur, est facilitée et rapide.

Selon des modes de réalisation préférés, la nacelle élévatrice comprend une ou plusieurs des caractéristiques suivantes :
- l'emplacement d'accueil comprend une structure de retenue du groupe électrogène par coopération de forme avec une structure de retenue complémentaire du groupe électrogène pour s'opposer au retrait du groupe électrogène de l'emplacement d'accueil dans la direction d'amenée/retrait ;
- la structure de retenue du groupe électrogène est une structure fixe de l'emplacement d'accueil qui est agencée de manière à être positionnée sous le groupe électrogène lorsqu'il est placé dans l'emplacement d'accueil et à coopérer avec la structure de retenue complémentaire du groupe électrogène qui est agencée sous le groupe électrogène ;
- la structure de positionnement du groupe électrogène est une structure fixe de l'emplacement d'accueil ;
- l'emplacement d'accueil comprend un support inférieur prévu pour y faire reposer le groupe électrogène par son côté inférieur lorsqu'il est en place dans l'emplacement d'accueil, la structure de positionnement et/ou la structure de retenue faisant partie du support inférieur ;
- la structure de positionnement comprend au moins un pan incliné ou bien deux pans inclinés dans des directions opposées et décalés l'un de l'autre dans la direction horizontale perpendiculaire à la direction d'amenée/retrait, l'au moins un pan incliné ou les deux pans inclinés étant prévus pour coopérer avec la structure de positionnement complémentaire du groupe électrogène.
- la nacelle élévatrice comprend en outre au moins un guide d'amenée de câble(s) qui amène au niveau de l'emplacement d'accueil un câble de liaison de données et/ou un câble de connexion de puissance, le câble de liaison de données étant prévu pour connecter une électronique de bord de la nacelle élévatrice au groupe électrogène lorsqu'il est dans l'emplacement d'accueil et le câble de connexion de puissance étant prévu pour connecter le groupe électrogène au circuit électrique de puissance de la nacelle élévatrice ;
- la nacelle élévatrice comprend une électronique de bord prévue pour commander le groupe électrogène ;
- l'électronique de bord comprend un module de communication sans fil pour permettre une commande à distance du groupe électrogène par le biais de l'électronique de bord lorsque le groupe électrogène est placé dans l'emplacement d'accueil, l'électronique de bord pouvant être avantageusement configurée pour permettre de démarrer à distance et/ou inhiber à distance le groupe électrogène par le biais du module de communication sans fil ;
- l'emplacement d'accueil comprend un tube de canalisation de gaz d'échappement qui est positionné contigu ou adjacent à une sortie d'échappement du groupe électrogène lorsqu'il est placé dans l'emplacement d'accueil ;
- la nacelle élévatrice comprend un système de verrouillage du groupe électrogène dans l'emplacement d'accueil aux fins de protection contre le vol de préférence au moyen d'un cadenas ou d'une serrure. En particulier l'emplacement d'accueil peut être pourvu d'une structure ou de moyens pour un cadenassage antivol du groupe électrogène l'emplacement d'accueil éventuellement en coopération avec une structure associée ou des moyens associés du groupe électrogène ;
- la nacelle élévatrice comprend un châssis doté d'organes de déplacement au sol, l'emplacement d'accueil étant agencé sur le châssis ou bien sur une tourelle du mécanisme de levage de la plate-forme de travail laquelle tourelle est montée pivotante sur le châssis ;
- l'emplacement d'accueil est agencé sur le châssis dans une position adjacente à une roue du châssis de manière qu'une partie du groupe électrogène s'étende hors du châssis au-dessus de la roue lorsque le groupe électrogène est dans l'emplacement d'accueil.

Selon un autre aspect ne faisant pas partie de la présente invention, il est proposé aussi un groupe électrogène prévu pour être utilisé avec la nacelle élévatrice décrite précédemment, lequel groupe électrogène est prévu pour être placé dans l'emplacement d'accueil de la nacelle élévatrice et comprend :
- au moins deux passages de fourche pour la manutention du groupe électrogène au moyen d'un chariot élévateur ;et
- une structure de positionnement complémentaire destinée à coopérer avec la structure de positionnement de l'emplacement d'accueil de la nacelle élévatrice, de manière à corriger, lorsque le groupe électrogène est amené jusque dans l'emplacement d'accueil, à la fois :
   • un défaut de centrage du groupe électrogène par rapport à l'emplacement d'accueil dans une direction horizontale perpendiculaire à la direction d'amenée/retrait, et
   • un défaut d'orientation angulaire du groupe électrogène dans un plan horizontal par rapport à la direction d'amenée/retrait.

Selon des modes de réalisation préférés, le groupe électrogène comprend une ou plusieurs des caractéristiques suivantes :
- le groupe électrogène comprend en outre une structure de retenue complémentaire destinée à coopérer avec la structure de retenue de l'emplacement d'accueil de la nacelle élévatrice de manière à s'opposer au retrait du groupe électrogène de l'emplacement d'accueil dans la direction d'amenée/retrait ;
- la structure de positionnement complémentaire et/ou la structure de retenue complémentaire sont fixes ;
- le groupe électrogène comprend une prise de puissance pour connecter le groupe électrogène à un circuit de puissance de la nacelle élévatrice et/ou un connecteur de liaison de données pour connecter une électronique de commande du groupe électrogène à une électronique de bord de la nacelle élévatrice ;
- le groupe électrogène est prévu pour être commandé de préférence exclusivement par une électronique de bord de la nacelle élévatrice ;

Selon un autre aspect encore ne faisant pas partie de la présente invention, il est proposé un ensemble comprenant une nacelle élévatrice telle que décrite plus haut et un groupe électrogène tel qu'il vient d'être décrit.

L'on comprendra que la solution proposée selon ce deuxième aspect peut s'appliquer notamment à une nacelle élévatrice selon l'invention décrite plus haut.

D'autres caractéristiques et avantages de l'invention apparaîtront à la lecture de la description qui suit d'un mode de réalisation préféré de l'invention, donnée à titre d'exemple et en référence au dessin annexé.
[Fig 1] représente une vue en perspective d'une nacelle élévatrice selon un mode de réalisation de l'invention observée depuis son côté droit, la plate-forme de travail étant en position abaissée.
[Fig 2] représente une vue en perspective de cette nacelle élévatrice, mais observée depuis son côté gauche et la plate-forme de travail étant en position levée.
[Fig 3] est une vue similaire à celle de la figure 1, mais le groupe électrogène étant enlevé de la nacelle élévatrice.
[Fig 4] est un schéma synoptique des circuits électriques et hydrauliques de la nacelle élévatrice.
[Fig 5] est un schéma synoptique illustrant des possibilités d'alimentation électrique mis à disposition sur la nacelle élévatrice.
[Fig 6] est une vue de dessus du châssis de la nacelle élévatrice, équipé des capotages latéraux logeant une partie des composants électriques et hydrauliques de la nacelle élévatrice.
[Fig 7] est une vue du côté gauche de la nacelle élévatrice, le capotage latéral étant enlevé.
[Fig 8] est une vue du côté droit de la nacelle élévatrice, le capotage latéral étant enlevé.
[Fig 9] est une vue locale en perspective d'un mode de réalisation de l'emplacement de la nacelle élévatrice pour le montage amovible d'un groupe électrogène.
[Fig. 10] est une vue en perspective d'un groupe électrogène regardé depuis l'avant et qui est prévu pour le montage amovible dans l'emplacement dédié de la nacelle élévatrice qui est illustré par la figure 9.
[Fig. 11] est une vue en perspective du groupe électrogène de la figure 9, mais vu depuis l'arrière.
[Fig. 12] est une vue schématique locale de face illustrant la coopération entre la partie inférieure du groupe électrogène des figures 10 et 11 et du fond de l'emplacement dédié de la nacelle élévatrice illustré à la figure 9 lorsque le groupe électrogène est placé dans l'emplacement.
[Fig. 13] est une vue schématique locale de côté correspondant à la figure 12.
[Fig. 14] est une section schématique locale au niveau de la partie inférieure arrière de l'emplacement dédié au groupe électrogène qui illustre un tube de canalisation de gaz d'échappement ménagé à cet endroit dans le cadre du mode de réalisation des figures 9 à 13.
[Fig. 15] est une vue locale illustrant une manière de cadenasser le groupe électrogène dans l'emplacement dédié de la nacelle élévatrice pour ce même mode de réalisation.
[Fig. 16] est une vue locale de côté du groupe électrogène des figures 10 et 11 qui illustre son tableau électrique.

La nacelle élévatrice illustrée comprend un châssis 1, un mécanisme de levage 2 monté sur le châssis 1 et une plate-forme de travail 3 supportée par le mécanisme de levage 2. La plate-forme de travail 3 comprend classiquement un plancher et un garde-corps et est prévu pour recevoir des personnes à bord, et éventuellement du matériel.

La nacelle élévatrice est du type à ciseaux. Autrement dit, le mécanisme de levage 2 est un mécanisme de levage à ciseaux : ce type de mécanisme de levage est connu en soi. Il comprend des poutres articulées en leur centre à la façon de ciseaux, ces mécanismes en ciseaux étant montés les uns au-dessus des autres par leurs extrémités qui sont reliées de manière pivotante afin de pouvoir se replier et se déployer en hauteur. Un ou plusieurs vérins hydrauliques 4 permettent de déployer ou replier le mécanisme de levage 2 pour lever la plate-forme de travail 3 à la hauteur de travail souhaitée et l'abaisser sur le châssis 1.

Le châssis 1 est pourvu d'au moins deux roues avant 10 et d'au moins deux roues arrière 11 par le biais desquelles le châssis 1 repose au sol et qui permettent de déplacer la nacelle élévatrice au sol. Comme cela est visible dans les figures, le côté avant de la nacelle élévatrice est désigné par AV, le côté arrière par AR, le côté gauche par G et le côté droit par D.

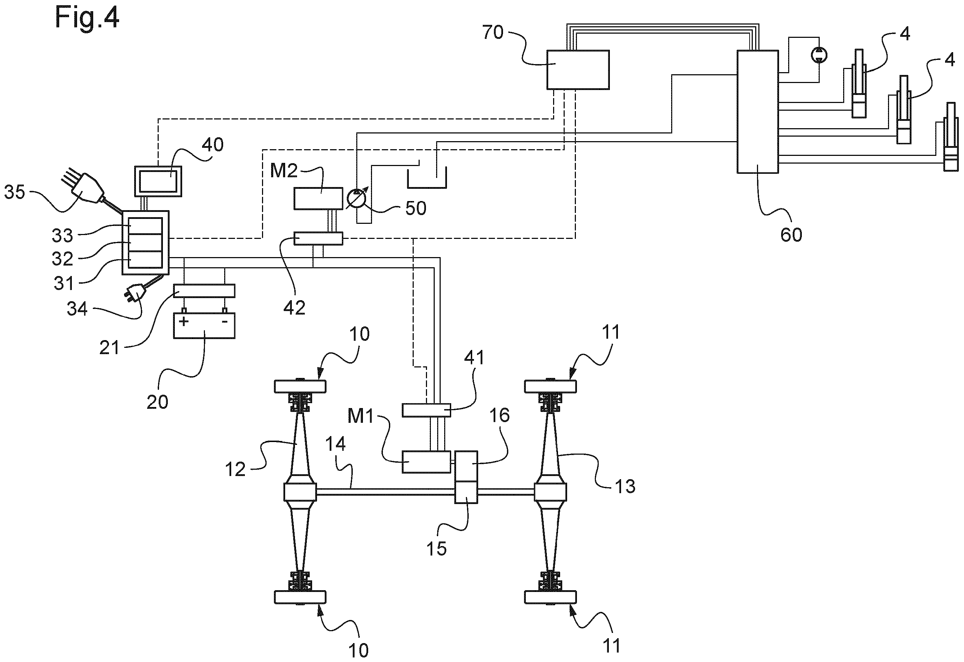

Comme cela est visible sur la figure 4, les roues avant 10 sont montées sur un essieu d'un pont avant 12 et les roues arrière 11 sont montées sur un essieu d'un pont arrière 13. Il est avantageux que toutes les roues 10, 11 soient motrices, et donc que la nacelle élévatrice soit dotée d'une transmission intégrale. Autrement dit, les ponts avant et arrière 12, 13 sont des ponts de transmission et ils sont reliés tous les deux à un même moteur électrique M1 aux fins d'entrainement en rotation des roues de chacun. Il peut être classiquement prévu un réducteur de vitesse 16 par le biais duquel la rotation de l'arbre de sortie du moteur électrique M1 est transmise aux ponts avant et arrière 12, 13. Bien entendu, une réduction de vitesse de rotation peut également être mise en oeuvre au niveau du différentiel de chaque pont 12, 13 et/ou au niveau de l'accouplement des roues 10, 11. De préférence, chacun des ponts 12, 13 intègre classiquement un différentiel permettant aux roues correspondantes de tourner à des vitesses différentes. En l'occurrence, le moteur M1 est monté sur l'un des ponts tandis que son mouvement de rotation est transmis à l'autre pont par le biais d'un arbre de transmission 14 accouplé à chacune de ses extrémités par le biais d'un joint de cardan respectif 17. Un différentiel central 15 est de préférence prévu pour répartir les efforts entre les essieux avant et arrière et permettre des différences de vitesses de roulage entre les deux essieux.

En l'occurrence, les roues avant 10 sont directrices, mais en variante il peut s'agir des roues arrière 11. Suivant une autre variante, les quatre roues 10, 11 sont directrices.

Le recours à quatre roues motrices est particulièrement adapté à une utilisation de la nacelle élévatrice en tout-terrain à l'extérieur, notamment pour le franchissement d'obstacle. De plus, le recours à une transmission intégrale est économique puisqu'un seul moteur électrique est requis pour l'entrainement des roues avant et arrière. De plus, les ponts avant et arrière 12, 13, le moteur électrique M1 et l'arbre de transmission 14 et autres composants associés peuvent être avantageusement préassemblé en un sous-ensemble prêt à être monté sur le châssis 1, procurant ainsi un gain de temps lors de l'assemblage de la nacelle élévatrice qui s'en trouve simplifié.

En variante, il peut être prévu deux moteurs électriques M1, l'un dédié à l'entrainement des roues avant 10 et l'autre dédié à l'entrainement des roues arrière 11. Dans ce cas, chacun de ces deux moteurs peut être monté directement sur le pont de transmission correspondant. Il est cependant plus économique de recourir à un seul moteur électrique M1 pour l'entrainement des roues.

Suivant une autre variante, la nacelle élévatrice est dotée de deux roues motrices seulement, soit celles à l'avant, soit celles à l'arrière, avec un moteur électrique M1 pour les entraîner.

Le moteur électrique M1 est de préférence exclusivement dédié à l'entrainement des roues. C'est le cas aussi s'il y a plusieurs moteurs électriques M1 pour entraîner les roues.

De façon générale, le fait d'équiper la nacelle élévatrice d'un pont avant 12 et d'un pont arrière 13 permet de la rendre apte à une utilisation tout-terrain en extérieur, notamment en prévoyant une garde au sol appropriée sans que la localisation du ou des moteurs électriques soient gênantes. Plus généralement, la conception mécanique de la nacelle élévatrice est adaptée à un usage tout-terrain en extérieur similairement aux nacelles élévatrices existantes prévues pour une telle utilisation, notamment en termes d'empattement et de résistance mécanique.

La figure 4 est un schéma synoptique des circuits électriques et hydrauliques de la nacelle élévatrice. Comme illustré, la nacelle élévatrice comprend une batterie 20 destinée à alimenter les différents composants électriques de la nacelle élévatrice. En variante, la nacelle élévatrice peut comporter plusieurs batteries branchées en série et/ou en parallèle, variante qui est dans la suite assimilée à une seule batterie 20. La batterie est de préférence prévue pour assurer à la nacelle élévatrice une autonomie de fonctionnement d'au moins une journée normale de travail.

La nacelle élévatrice comprend au moins un premier chargeur monophasé 31 destiné à recharger la batterie 20 via un circuit 21 de gestion de la batterie 20. Il est de préférence prévu pour accepter en entrée une tension alternative correspondant à la tension secteur monophasé du pays dans lequel la nacelle élévatrice est utilisée.

Pour rappel, en Europe, la tension secteur monophasé est généralement de 230 VAC 50 Hz. Pour beaucoup de pays dans le monde, elle est comprise dans l'intervalle allant de 220 VAC à 240 VAC, généralement à 50 Hz, parfois 60 Hz. Dans de nombreux pays du continent américain et dans d'autres pays encore, la tension secteur monophasée est de 110 à 127 VAC, généralement à 60 Hz, parfois 50 Hz. Au Japon, elle est de 100 VAC, 60 Hz ou 50Hz selon les régions.

De ce fait, le chargeur 31 peut avantageusement être prévu pour un intervalle de tension secteur monophasée de manière à être adaptée à un usage dans différents pays, par exemple de 110 VAC à 230 VAC, voire 100 VAC à 240 VAC.

La nacelle élévatrice peut comprendre deux autre chargeurs monophasés 32, 33 prévus, ensemble avec le premier chargeur 31, pour recharger la batterie 20 - via le circuit 21 de gestion de la batterie 20 - à partir d'un réseau secteur triphasé.

A cette fin, la nacelle élévatrice est équipée d'un câble muni d'une fiche standard 34 ou d'une prise standard ou de tout autre moyen approprié pour permettre de brancher l'un des chargeurs monophasés 31 à 33 à une prise monophasée standard du réseau électrique secteur pour le pays concerné. Elle est équipée d'un deuxième câble muni d'une fiche standard 35 ou d'une prise standard ou de tout autre moyen approprié pour permettre de brancher la nacelle élévatrice à une prise triphasée standard d'un réseau électrique triphasé.

Cette possibilité est avantageuse lorsque le courant maximal délivré par une prise standard du réseau secteur monophasé n'est pas compatible avec une charge rapide de la batterie 20. C'est le cas typiquement de la plupart des réseaux secteurs monophasés à 220 VAC ou 230 VAC pour lesquels une prise standard est prévue pour délivrer 16 A au maximum. Un réseau d'alimentation triphasé permet une charge de la batterie 20 sensiblement plus rapide que dans le cas d'un réseau d'alimentation monophasé puisque la puissance maximale pouvant être fournie par les trois phases simultanément est supérieure à celle d'une seule phase et que la puissance de sortie des chargeurs 31 à 33 est additionnée.

De ce point de vue, chacun de chargeurs 31, 32, 33 est préférentiellement prévu pour accepter en entrée au moins une tension monophasée de 220VAC ou 230 VAC. Ainsi, la batterie 20 peut être rechargée au choix par branchement du premier chargeur 31 à un réseau secteur monophasé à la tension correspondante - ou à une autre tension qu'il accepte éventuellement en entrée - ou bien par branchement des trois chargeurs 31, 32, 33 à un réseau triphasé de 380 VAC ou 400 VAC, chaque chargeur étant alors branché entre une phase respective et le neutre de manière à recevoir une tension d'entrée de 220 VAC ou 230 VAC.

Les chargeurs 32, 33 peuvent être prévus que pour une tension monophasée de 220 VAC ou 230 VAC tandis que le premier chargeur 31 peut être prévu pour un intervalle de tension comme mentionné plus haut. En variante, les trois chargeurs 31, 32, 33 sont identiques et prévus pour un intervalle de tension comme mentionné à propos du premier chargeur 31.

Il est avantageux que les chargeurs 31 à 33 soient aptes à charger ensemble la batterie 20 à 80% de sa capacité en moins de 3 heures, voire moins de 2,5 heures, préférentiellement en 2 heures, dès lors bien entendu que le réseau d'alimentation électrique triphasé auquel ils sont branchés est apte à fournir la puissance requise. En comparaison, la charge de la batterie 20 à 80 % de sa capacité par un seul chargeur monophasé nécessiterait alors entre environ 6 à 8 heures. Il est envisageable aussi de permettre une charge de la batterie 20 par deux phases seulement en utilisant ou équipant la nacelle élévatrice de seulement deux des trois chargeurs 31 à 33. La nacelle élévatrice est préférentiellement conçue pour présenter trois emplacements prévus chacun pour le montage de l'un respectif des chargeurs 31, 32, 33. Ainsi, la même nacelle élévatrice peut être équipée d'un à trois chargeurs 31, 32, 33 selon le souhait.

L'électronique de bord 70 est de préférence prévue pour adapter la courbe de charge de la batterie 20 selon les possibilités du réseau électrique secteur du pays concerné et selon qu'elle est faite à partir du réseau secteur monophasé ou triphasé. Pour cela, il peut être prévu que le pays soit indiqué à l'électronique de bord 70 par l'opérateur par le biais du pupitre 75. La nacelle élévatrice est prévue pour y monter de manière amovible un groupe électrogène 40. Le groupe électrogène 40 est destiné à recharger la batterie 20 afin d'accroître l'autonomie de fonctionnement de la nacelle élévatrice, notamment dans le cas où il n'y a pas d'accès à un réseau secteur ou une autre source d'énergie électrique aux fins de recharger la batterie 20. Plus précisément, la charge de la batterie 20 se fait via les trois chargeurs 31 à 33 ou l'un d'entre eux selon que le groupe électrogène 40 fournit en sortie un courant triphasé ou monophasé.

La nacelle élévatrice est équipée d'un circuit hydraulique alimentant les vérins hydrauliques 4 servant à actionner le mécanisme de levage 2. Ce circuit hydraulique comprend une pompe hydraulique 50 - en variante, plusieurs - qui est entraînée par un deuxième moteur électrique M2. Il comprend aussi un distributeur hydraulique 60 par le biais duquel les différents actionneurs hydrauliques sont alimentés en fluide hydraulique, en particulier les vérins hydrauliques 4. Celui-ci alimente aussi d'autres actionneurs hydrauliques - non tous représentés - tels que ceux servant à commander l'orientation des roues directrices 10 et/ou 11, à étendre ou rétracter quatre pieds stabilisateurs 19 agencés chacun à un coin du châssis 2 et à libérer les freins des roues 10, 11. Il peut aussi avantageusement être prévu un ou deux actionneurs hydrauliques - non représentés - alimentés par le distributeur hydraulique 60 et servant à bloquer et libérer sélectivement le différentiel de l'un des ponts avant et arrière 12, 13 ou les deux, en cas de patinage des roues 10 et/ou 11.

En variante, il peut être prévu plusieurs moteurs électriques M2 entraînant une ou plusieurs pompes hydrauliques 50 d'un circuit hydraulique commun ou de circuits hydrauliques distincts. Il est cependant plus économique de recourir à une seule pompe hydraulique 50 et à un seul moteur électrique M2 pour entraîner celle-ci.

Le ou les moteurs électriques M2 sont de préférence exclusivement dédiés à l'entrainement de la pompe hydraulique 50 ou de l'ensemble des pompes hydrauliques s'il y en a plusieurs, du ou des circuits hydrauliques.

La nacelle élévatrice est dépourvue de moteur à combustion interne, que ce soit pour déplacer la nacelle élévatrice au sol ou pour actionner le mécanisme de levage 2 ou d'autres actionneurs hydrauliques. En effet, la puissance motrice est toujours fournie à la ou les pompes hydrauliques par le ou les moteurs électriques M2. Autrement dit, la puissance motrice pour actionner le mécanisme de levage de la plate-forme de travail est toujours fournie exclusivement par le ou les moteurs électriques M2 (hormis bien entendu l'action éventuelle de la gravité). Il en va évidemment de même pour les autres actionneurs hydrauliques mentionnés plus haut.

Similairement, la puissance motrice pour entraîner les roues 10 et/ou 11 selon le cas, et donc pour déplacer la nacelle élévatrice au sol, est toujours fournie exclusivement par le ou les moteurs électriques M1 dédiés à cette fonction (hormis bien entendu l'action éventuelle de la gravité).

Les moteurs électriques M1 et M2 sont avantageusement des moteurs à courant alternatif de préférence triphasé car ceux-ci ont un meilleur rendement comparé aux autres types de moteurs. Ils sont alimentés par la batterie 20 par le biais d'un onduleur 41, 42 respectif convertissant la tension continue de la batterie 20 en tension alternative.

La nacelle élévatrice est aussi équipée d'une électronique de bord 70 comprenant par exemple un calculateur, pour commander le distributeur hydraulique 70, les chargeurs 31 à 33, ainsi que les moteurs électriques M1 et M2 via leur onduleur respectif 41, 42. La liaison de communication entre l'électronique de commande 70 et ces composants, ou du moins ceux qui sont distants, peut se faire par un bus tel qu'un bus de données CAN conforme à la norme ISO 11898.

L'électronique de bord 70 est préférentiellement configurée pour gérer de manière optimisée la consommation d'énergie électrique des différents composants, tout particulièrement des moteurs électriques M1, M2, ceci afin d'optimiser l'autonomie de la batterie 20. En particulier, elle peut être avantageusement prévue pour limiter les pics de puissance des moteurs électriques M1 et M2 en fournissant progressivement la puissance à ceux-ci, par exemple lors d'une commande de levage de la plate-forme de travail 3 ou d'une commande de déplacement au sol. L'électronique de bord peut aussi être configurée pour appliquer une consigne de limitation de puissance aux onduleurs 41 et 42 - voire aussi à l'onduleur 22 mentionné plus bas - en fonction de l'état de la batterie 20, par exemple en fonction de leur vieillissement ou de leur température.

L'électronique de bord 70 peut aussi être prévue pour identifier le type de groupe électrogène 40 monté le cas échéant sur la nacelle élévatrice, s'il est prévu qu'elle puisse fonctionner avec différents modèles de groupe électrogènes, ce qui permet à l'électronique de bord 70 d'adapter la courbe de charge à la puissance maximale que le groupe électrogène peut fournir. Par ailleurs, l'électronique de bord 70 peut être prévue pour provoquer automatiquement la mise en route du groupe électrogène 40 lorsque le niveau de charge de la batterie 20 passe en dessous d'un seuil prédéterminé. Bien entendu, il peut être prévu que l'opérateur ait lui-même la possibilité de mettre en route le groupe électrogène 40.

Pour des raisons de sécurité des utilisateurs, il est avantageux que l'ensemble des circuits électriques de la nacelle élévatrice - exception faite de l'entrée des chargeurs 31 à 33 - fonctionnent à une tension inférieure ou égale à 50 V, et que donc la tension nominale des moteurs électriques soit inférieure à 50 VCA, de même que la tension délivrée par la batterie 20 soit inférieure ou égale à 50 VCC.

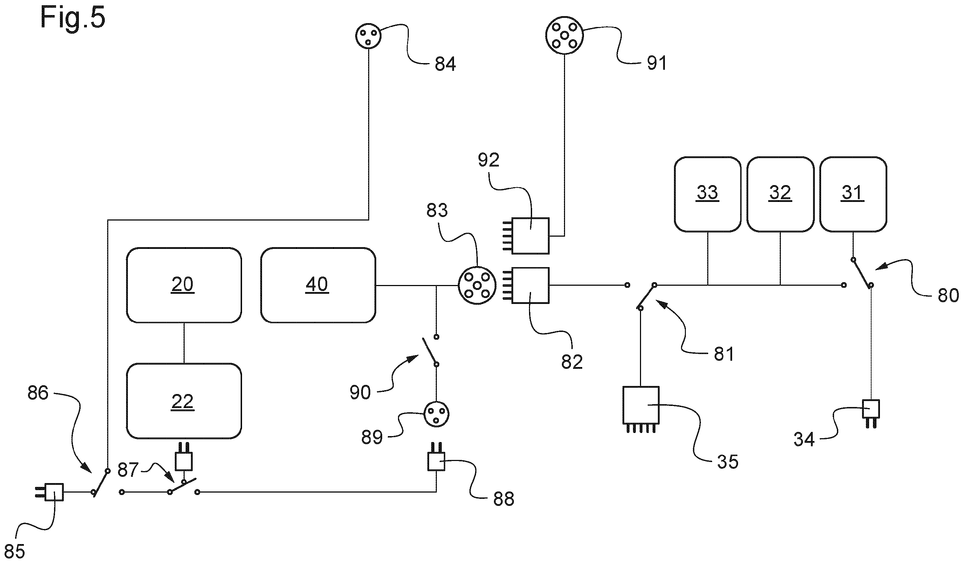

La figure 5 illustre des possibilités d'alimentation électrique mis à disposition sur la nacelle élévatrice.

Pour la charge à partir du réseau électrique secteur, un commutateur 80 permet de relier le premier chargeur 31 au choix, soit au câble monophasé muni de la fiche 34 ou similaire - déjà mentionné à propos de la figure 4 - aux fins de branchement à une alimentation secteur monophasée, soit à une ligne triphasée aux fins de branchement à une phase et le neutre d'une source d'alimentation triphasée, le câble reliant les deux autres chargeurs 32, 33 à une phase respective et le neutre de la source d'alimentation triphasée.

Un commutateur 81 permet de sélectionner au choix une source d'alimentation triphasée parmi le câble muni de la fiche 35 ou similaire - déjà mentionné à propos de la figure 4 - aux fins de branchement à une alimentation secteur triphasée, soit à la sortie triphasée du groupe électrogène 40 par le biais d'une fiche 82 et d'une prise correspondante 83.

Il peut être prévu une prise électrique standard monophasée 84 sur la plate-forme de travail 3 destinée à être alimentée à la tension secteur monophasée du pays concerné, ce qui permet avantageusement aux utilisateurs de la plate-forme de travail 3 d'y brancher un appareil électrique.

La prise 84 est alimentée via une ligne électrique descendant jusqu'au châssis 1, par exemple le long du système de levage 2.

Il peut être prévu que cette ligne électrique puisse être alimentée par une ou plusieurs des manières suivantes :
- par branchement au réseau secteur monophasé, par exemple par une fiche dédiée 85 ou autre moyen approprié,
- par branchement à la sortie d'un onduleur dédié 22 dont l'entrée est reliée à la batterie 20, et/ou
- par branchement à la sortie du groupe électrogène 40, en particulier entre une phase et le neutre de celle-ci s'il s'agit d'un groupe électrogène triphasé comme dans notre exemple.

Dans le détail de mise en oeuvre, il est prévu le cas échéant des commutateurs pour permettre de brancher sélectivement la ligne électrique comme souhaité. Lorsque les trois possibilités sont prévues, il peut être prévu un commutateur 86 pour le branchement, soit à la fiche 85 ou similaire, soit à une alimentation par la nacelle élévatrice, un autre commutateur 87 permettant de sélectionner le branchement soit à l'onduleur 22, soit au groupe électrogène 40.

Le branchement au groupe électrogène 40 peut par exemple se faire par le biais d'une fiche monophasée standard 88 se branchant sur une prise monophasée correspondante 89 reliée à une phase et au neutre du groupe électrogène 40, de préférence par le biais d'un interrupteur 90. La prise 89 est de préférence agencée sur le châssis 1 et peut servir de prise auxiliaire que les utilisateurs peuvent aussi utiliser pour y brancher un appareil électrique quelconque.

Il peut aussi être prévu une prise électrique standard triphasée 91 sur la plate-forme de travail 3 destinée à être alimentée à la tension secteur triphasée du pays concerné, ce qui permet avantageusement aux utilisateurs de la plate-forme de travail 3 d'y brancher un appareil électrique. La prise 91 est alimentée via une ligne électrique descendant jusqu'au châssis 1, par exemple le long du système de levage 2. Elle est munie d'une fiche triphasée standard 92 prévue pour être branchée au choix à une prise du réseau électrique secteur, soit à une prise de sortie du groupe électrogène 40. Les commutateurs 80, 81, 86, 87 et 90 et l'onduleur 22 peuvent être commandés par l'électronique de bord 70 - mentionné en référence à la figure 4 - notamment en fonction des commandes d'un opérateur. Il peut être prévu sur le pupitre de commande à bord de la plate-forme de travail 3 un bouton de commande ou similaire pour mettre la prise 84 et/ou la prise 91 selon le cas sous tension. Similairement, il peut être prévu de permettre à l'opérateur de sélectionner la source d'alimentation de la prise 84 par exemple au niveau du pupitre 75 sur le châssis 1.

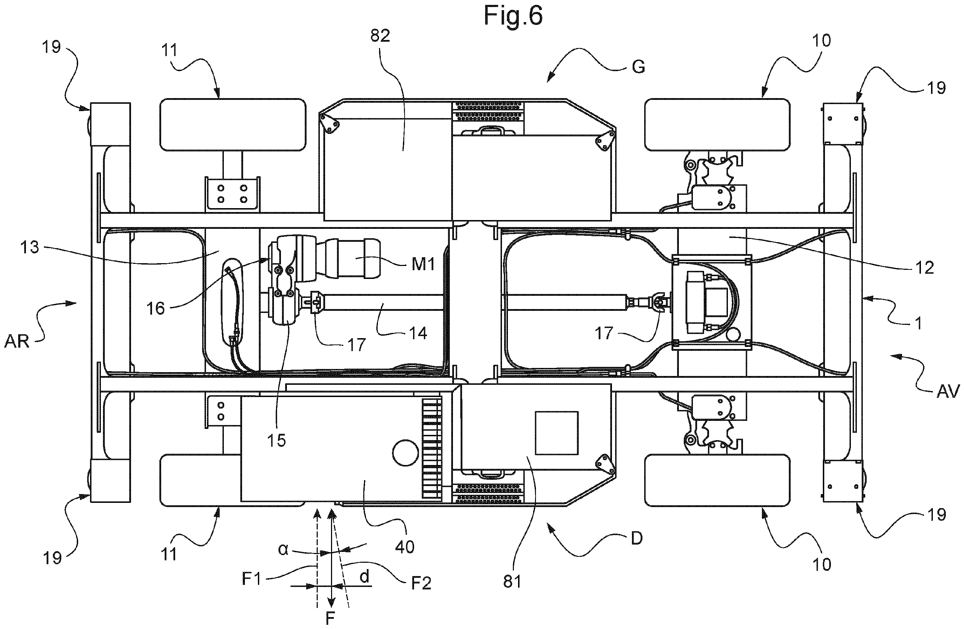

Les figures 6 à 8 illustrent l'implantation physique des principaux composants électriques et hydrauliques sur la nacelle élévatrice.

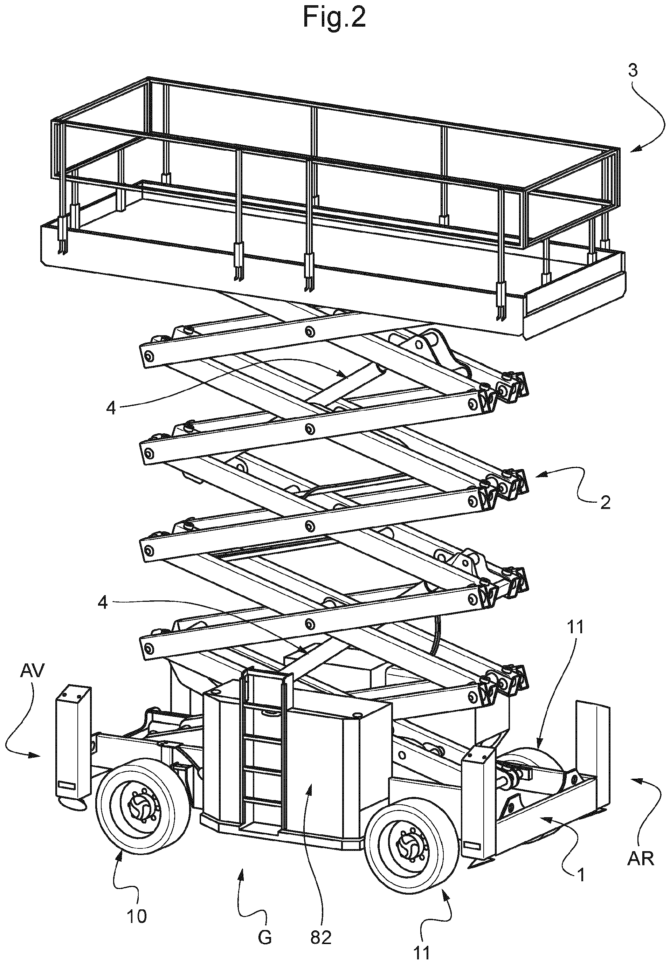

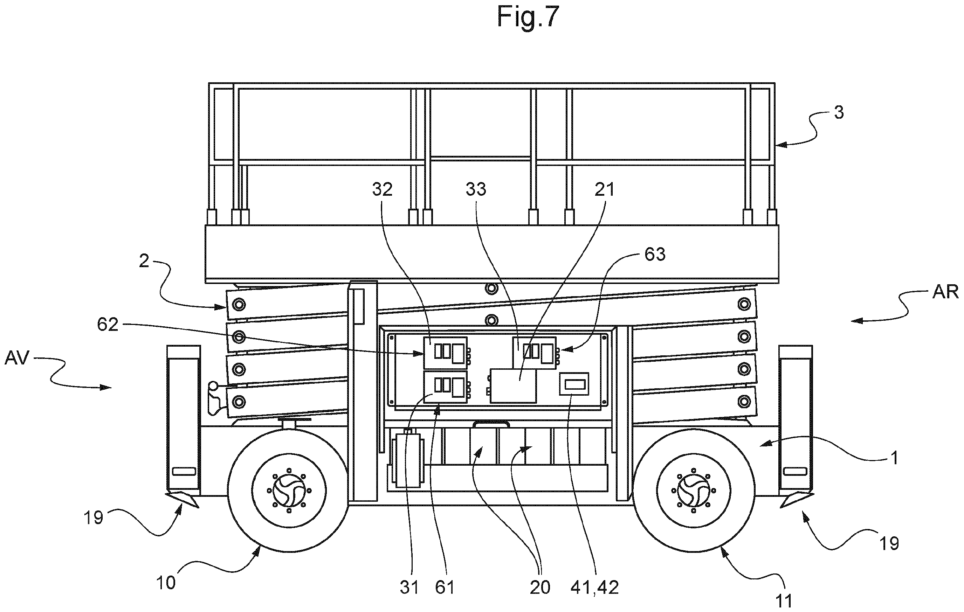

Comme illustré sur la figure 7, la batterie 20 et les chargeurs 31, 32 et 33 sont situés sur un premier côté latéral du châssis 1 par rapport au mécanisme de levage 2, c'est-à-dire sur le côté gauche G dans notre exemple. Les chargeurs 31, 32 et 33 sont chacun reçus dans un emplacement respectif 61, 62 et 63 prévu à cet effet. Les emplacements 62 et/ou 63 restent dépourvus de leur chargeur 32 et/ou 33 dans le cas où la nacelle élévatrice ne comprend qu'un seul chargeur ou deux. Le circuit 21 de gestion de la batterie 20, ainsi que les onduleurs 41, 42 peuvent aussi être agencés de ce côté latérale du châssis 1. Ces composants sont logés à l'intérieur d'un capotage 82 visible sur les figures 2 et 6.

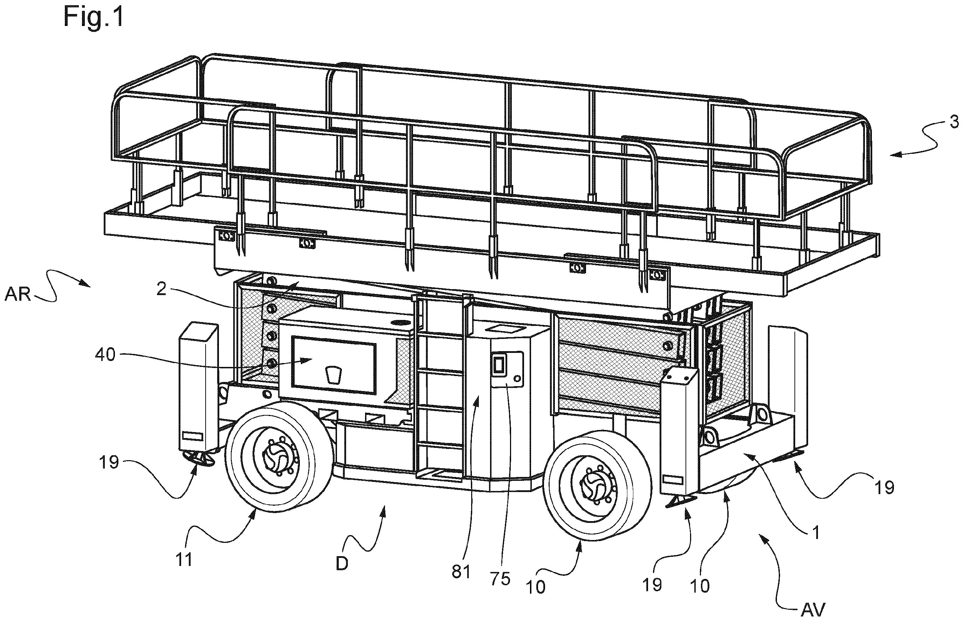

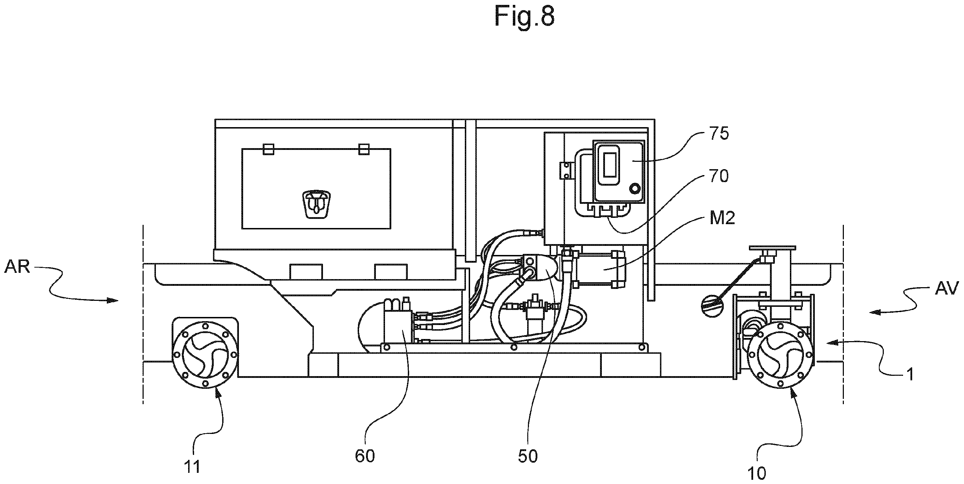

Comme illustré par la figure 8 (dans laquelle les pneus des roues 10, 11 et les pieds stabilisateurs 19 ont été omis par commodité), le moteur électrique M2 et la pompe hydraulique 50 sont agencés sur le côté latéral opposé du châssis 1 par rapport au mécanisme de levage 2, c'est-à-dire sur le côté droit D dans notre exemple. Le distributeur hydraulique 60 est de préférence agencé sur ce même côté. Il y est aussi prévu un pupitre de commande 75 derrière lequel est agencé l'électronique de commande 70. Le pupitre de commande 75 est aussi visible sur la figure 1. Ces composants sont logés à l'intérieur d'un capotage 81 visible sur les figures 1, 3 et 6. Bien entendu, il peut être classiquement prévu un autre pupitre de commande fixe ou amovible à bord de la plate-forme de travail 3.

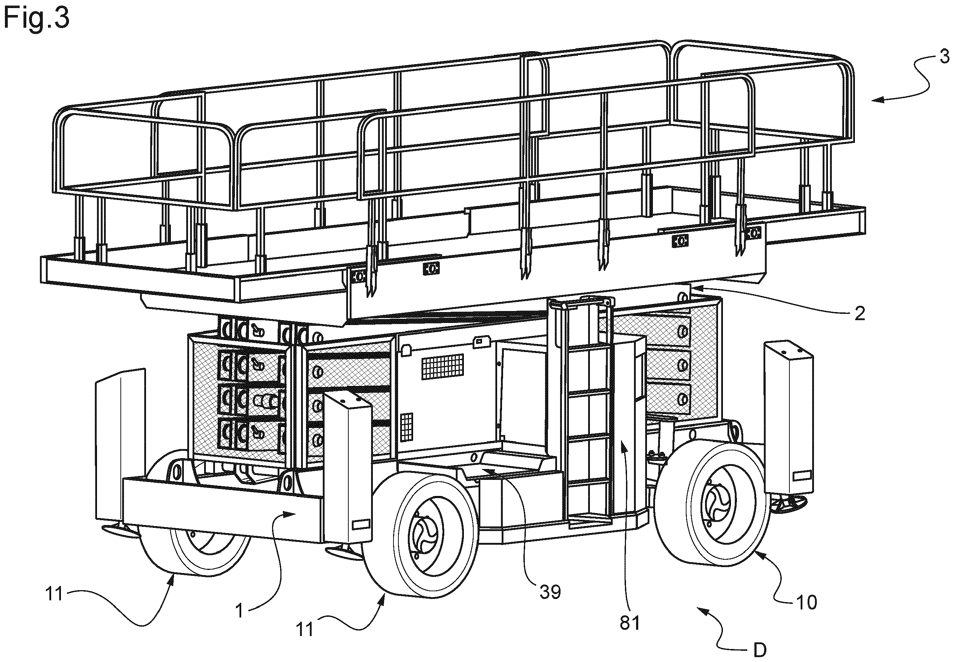

Comme ces composants sont moins encombrants que la batterie 20, un emplacement 39 est prévu de ce côté latéral du châssis pour le montage amovible du groupe électrogène 40 : cf. la figure 3 où l'emplacement 39 est représenté en l'absence du groupe électrogène 40. Eu égard à son poids, le groupe électrogène 40 est préférentiellement placé dans son emplacement 39 ou enlevé de celui-ci au moyen d'un chariot à fourche. Un dispositif de maintien en position du groupe électrogène 40 dans son emplacement 39 - non représenté - est préférentiellement prévu : celui-ci peut être de tout type approprié. Il est avantageux de prévoir un dispositif de verrouillage du groupe électrogène 40 dans son emplacement 39 aux fins de protection contre le vol.

Un exemple de dimensionnement des composants est comme suit dans le cas d'une nacelle élévatrice prévue pour le levage d'une charge maximale de 750 kg jusqu' à une hauteur maximale de 18 m :
- la batterie 20 a une tension nominale de 48 VCC et une capacité de 420 A.h,
- le moteur M1 est de type alternatif triphasé de tension nominale 32 VCA, 50 Hz, et d'une puissance de sortie maximale de 6,3 KW,
- le moteur M2 est de type alternatif triphasé de tension nominale 32 VCA, 50 Hz, et d'une puissance de sortie maximale de 10,5 KW,
- les chargeurs 31 à 33 acceptent chacun en entrée une tension alternative comprise entre 110 et 230 VCA et fournissent chacun en sortie une tension de 48 VCC et une puissance maximale de 3 KW,
- selon les versions, le groupe électrogène est choisi pour fournir une tension alternative monophasée entre 110 VCA et 230 VCA ou bien triphasée de 400 VCA, et pour fournir une puissance maximale choisie dans une plage allant de 6 KW à 9KW, la capacité de son réservoir à carburant étant choisie entre 10 et 30 litres.

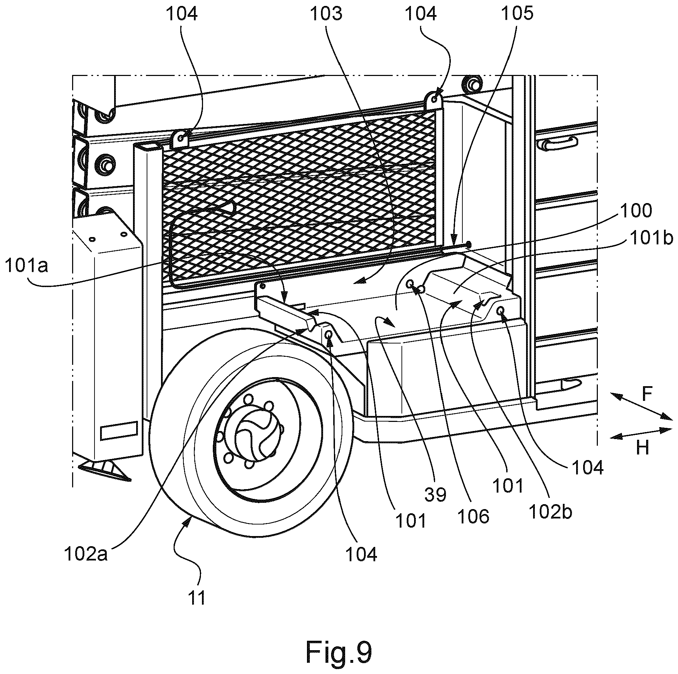

En référence notamment aux figures 9 à 15, nous allons maintenant décrire plus en détail un mode de réalisation avantageux de l'emplacement 39 de la nacelle élévatrice prévue pour accueillir par montage amovible le groupe électrogène 40, ainsi que ce dernier.

L'emplacement 39 est situé sur un côté latéral du châssis 1 comme illustré à la figure 3. Comme cela est visible sur les figures 3 et 9, l'emplacement 39 est ouvert sur le côté extérieur de la nacelle élévatrice. Cela permettre d'amener, notamment au moyen d'un chariot élévateur, le groupe électrogène 40 dans l'emplacement d'accueil et de l'en retirer suivant une direction d'amenée/retrait F illustrée sur la figure 9. La direction F est préférentiellement sensiblement horizontale et perpendiculaire au côté du châssis 1 où est ménagé l'emplacement 39. Autrement dit, la mise en place du groupe électrogène 40 dans l'emplacement 39 se fait globalement par déplacement horizontal vers l'emplacement 39, suivi d'un mouvement d'abaissement final jusque dans l'emplacement 39. En variante, une porte fermant l'emplacement 39 peut être prévue, celle-ci étant alors ouverte lors des opérations de mise en place ou de retrait du groupe électrogène 40 de l'emplacement 39.

L'emplacement 39 comprend un support 100 sur laquelle vient reposer le groupe électrogène 40. Dans cet exemple, le support 100 est une surface s'étendant en continu sous le groupe électrogène 40, mais il peut être réalisé sous toute forme appropriée telle que deux barres de support individuelles qui sont parallèles et distantes l'une de l'autre.

Dans cet exemple, l'emplacement 39 est agencé sur le châssis 1 dans une position adjacente à la roue 11 du châssis 1 de manière qu'une partie du groupe électrogène 40 s'étende hors du châssis 1 au-dessus de la roue 11 lorsque le groupe électrogène 40 est dans l'emplacement 39. Cette mesure permet de limiter la taille réservée à l'emplacement 39 sur le châssis 1, ce d'autant plus que généralement le châssis 1 ne s'étend pas au-dessous des roues 10, 11 de la nacelle élévatrice.

Le support 100 comprend une structure de positionnement 101 du groupe électrogène 40 dans l'emplacement 39. Dans cet exemple, la structure de positionnement 101 comprend deux pans inclinés 101a, 101b dans des directions opposées et décalés l'un de l'autre dans la direction H horizontale perpendiculaire à la direction d'amenée/retrait F. La direction H correspond en l'occurrence à la direction longitudinale AV-AR du châssis 1. Chacun des pans inclinés 101a, 101b est une surface plane parallèle à la direction d'amenée/retrait F.

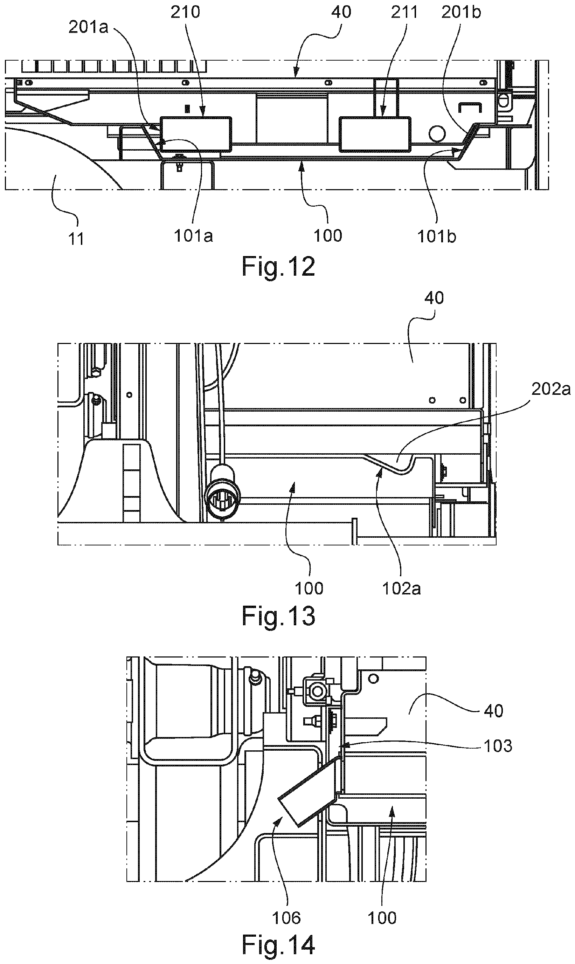

Les pans inclinés 101a, 101b sont prévus pour coopérer avec une structure complémentaire agencée sur le dessous du groupe électrogène 40. Cette structure complémentaire est illustrée par la figure 12. En l'occurrence, elle comprend, d'une part, un côté 201a d'un tube 210 constituant un passage pour une branche d'une fourche d'un chariot élévateur. Ce côté 201a du tube 210 coopère avec le pan incliné 101a du support 100. La structure complémentaire du groupe électrogène 40 comprend, d'autre part, un flanc incliné 201b prévu pour coopérer avec le pan incliné 101b du support 100.

La coopération de forme entre la structure de positionnement 101 de l'emplacement 39 et la structure complémentaire 201a, 201b du groupe électrogène 40 permet, lorsque le groupe électrogène 40 est amené dans l'emplacement 39, de corriger un éventuel défaut de centrage du groupe électrogène 40 par rapport à l'emplacement d'accueil dans la direction H. Cette situation est illustrée sur la vue de dessus du châssis 1 de la figure 6 où la flèche F1 illustre une direction d'amenée réelle du groupe électrogène 40 en décalage latéral d'une distance d par rapport à la direction d'amenée F centrée idéalement par rapport à l'emplacement 39.

Similairement, la coopération de forme entre la structure de positionnement 101 de l'emplacement 39 et la structure complémentaire 201a, 201b du groupe électrogène 40 permet, lorsque le groupe électrogène 40 est amené dans l'emplacement 39, de corriger un éventuel défaut d'orientation angulaire du groupe électrogène dans un plan horizontal par rapport à la direction d'amenée/retrait F. Cette situation est aussi illustrée sur la vue de dessus du châssis 1 de la figure 6 où la flèche F2 illustre la direction d'amenée réelle du groupe électrogène 40 en décalage angulaire α dans un plan horizontal par rapport à la direction d'amenée F orientée idéalement par rapport à l'emplacement 39.

L'on comprendra que la coopération de forme entre la structure de positionnement 101 de l'emplacement 39 et la structure complémentaire 201a, 201b du groupe électrogène 40 permet de corriger de la même manière un défaut combiné de centrage et d'orientation angulaire du groupe électrogène 40.

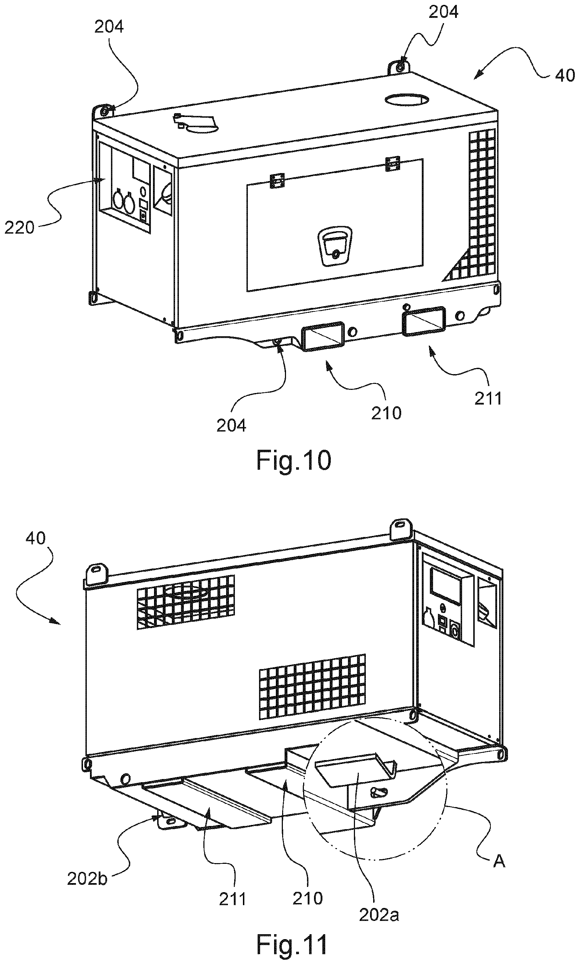

Cette correction automatique du centrage et de l'orientation angulaire du groupe électrogène 40 par rapport à l'emplacement 39 permet avantageusement une mise en place correcte du groupe électrogène 40 dans l'emplacement 39, malgré une manoeuvre d'approche imprécise du groupe électrogène 40 vers l'emplacement 39 lors de sa mise en place dans ce dernier. La mise en place du groupe électrogène 40 dans l'emplacement 39 est ainsi facilitée, qu'il soit recouru à un chariot élévateur ou autrement. Pour sa manipulation par un chariot élévateur, le groupe électrogène 40 comprend préférentiellement deux tubes 210, 211 de passage de fourche du chariot élévateur qui sont agencés de préférence sur le dessous du groupe électrogène 40 : cf. figure 10. Les tubes 210, 211 de passage de fourche - ou alternativement une autre structure destinée au passage de fourche - sont réalisés non débouchant à l'arrière du groupe électrogène 40, ce qui supprime le risque d'interférence de la fourche d'un chariot élévateur avec la paroi 103 ou tout autre structure de la nacelle élévatrice à l'arrière de l'emplacement 39.

L'on comprendra que la structure de positionnement 101 de l'emplacement 39 et la structure complémentaire 201a, 201b peuvent être réalisées de toute autre manière appropriée. Par exemple, les pans inclinés 101a, 101b pourraient être tournées dans des directions opposées au lieu d'être en regard. Ou encore il pourrait n'y avoir qu'un seul pan incliné dans l'emplacement 39, l'autre étant remplacé par un épaulement similairement au cas du côté 201a du tube 210 du groupe électrogène 40. D'autres formes que des pans inclinés sont aussi envisageables. La structure de positionnement de l'emplacement 39 peut aussi être agencée ailleurs que sur la surface de support 100, par exemple sur des côtés latéraux de l'emplacement 39.

L'emplacement 39 comprend aussi deux encoches 102a et 102b ménagées au niveau des pans inclinés 101a et 101 b. Le groupe électrogène 40 présente sur le dessous deux saillies 202a et 202b qui viennent engager respectivement les encoches 102a et 102b de l'emplacement 39 lorsque le groupe électrogène 40 est en place dans l'emplacement 39 : cf. la vue locale de côté de la figure 13. La saillie 202a est particulièrement visible sur l'agrandissement local référencé A sur la vue du dessous du groupe électrogène de la figure 11.

La coopération des saillies 202a et 202b et des encoches 102a et 102b dans lesquelles elles sont engagées s'oppose au retrait du groupe électrogène 40 de l'emplacement 39 dans la direction d'amenée/retrait. Ceci permet notamment de dégager la fourche d'un chariot élévateur de sous le groupe électrogène 40 sans risque de retrait accidentel du groupe électrogène 40 de l'emplacement 39, après une opération de mise en place du groupe électrogène 40 dans l'emplacement 39 au moyen du chariot élévateur.

L'on comprendra que la structure de retenue formée par les encoches 102a, 102b et la structure complémentaire de retenue formée par les saillies 202a et 202b n'est qu'un exemple de mise en oeuvre et peut être mise en oeuvre de toute autre manière appropriée. Par exemple, les encoches 102a, 102b peuvent être situées ailleurs qu'au niveau des pans inclinés 101a et 101b. Il pourrait n'y avoir qu'une seule encoche et une seule saillie. D'autres structures que des encoches et des saillies correspondantes peuvent aussi être envisagées.

De façon générale, on remarque que la structure de positionnement 101 et la structure complémentaire 201a, 201b, et similairement la structure de retenue 102a, 102b et la structure complémentaire 202a, 202b, peuvent avantageusement être des structures fixes - c'est-à-dire sans pièce mobile - de l'emplacement 39 et du groupe électrogène 40 respectivement, ce qui procure à la fois robustesse et simplicité de mise en oeuvre.

L'emplacement 39 comprend aussi une paroi arrière 103 qui sert de butée pour positionner le groupe électrogène 40 dans l'emplacement d'accueil dans la direction d'amenée/retrait. Cela évite notamment que le groupe électrogène 40 puisse être poussé au-delà de l'emplacement 39 lors d'une opération de mise en place du groupe électrogène 40. Cette fonction de butée peut être réalisée par tout autre moyen approprié telle que par exemple un ou plusieurs pions faisant saillie du support 39.

L'emplacement 39 comprend aussi des moyens de fixation amovible pour maintenir fermement le groupe électrogène 40 dans l'emplacement 39 et le libérer de manière à permettre le retrait du groupe électrogène 40 de l'emplacement 39. Dans un mode de réalisation simple, ces moyens de fixation peuvent être des trous taraudés 104 pour recevoir des vis de fixation traversant des trous ménagés dans des pattes 204 du groupe électrogène 40. Ainsi, après mise en place du groupe électrogène 40 dans l'emplacement 39, les moyens de fixation amovible empêche que le groupe électrogène 40 ne quitte l'emplacement 39, alors que la structure de retenue formée par les encoches 102a, 102b et la structure complémentaire de retenue formée par les saillies 202a et 202b laisse subsister ce risque, en particulier en cas de circulation de la nacelle élévatrice sur un terrain accidenté. L'on comprendra que les moyens de fixation amovible peuvent être mises en oeuvre par tous moyens appropriés autres que des trous taraudés pour vis de fixation.

L'emplacement 39 peut aussi comprendre un tube 106 de canalisation de gaz d'échappement qui est positionné contigu ou adjacent à une sortie d'échappement du groupe électrogène 40 lorsqu'il est placé dans l'emplacement 39. Le tube 106 est dans cet exemple ménagé au niveau de la paroi arrière 103. Le tube 106 est le mieux visible dans la vue locale de la figure 14. Cette mesure permet d'évacuer les gaz d'échappement vers un endroit éloigné des utilisateurs, de préférence sous le châssis 1.

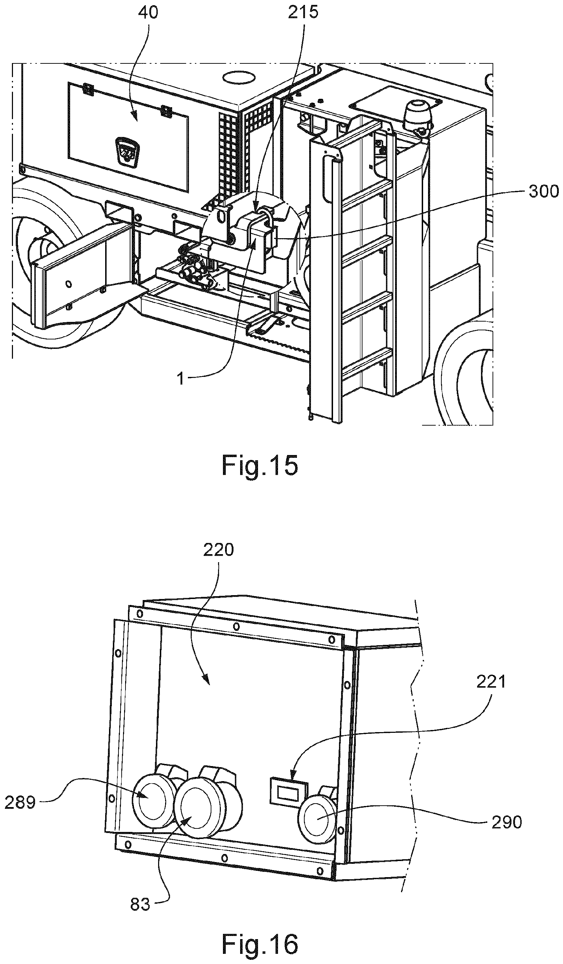

Comme déjà mentionné, il peut être prévu un dispositif de verrouillage du groupe électrogène 40 dans son emplacement 39 aux fins de protection contre le vol. En particulier, l'emplacement 39 peut être pourvu d'une structure ou de moyens pour un verrouillage ou cadenassage antivol du groupe électrogène 40 dans l'emplacement 39 éventuellement en coopération avec une structure associée ou des moyens associés du groupe électrogène 40. Une mise en oeuvre simple consiste en un trou de passage réalisé sur le châssis 1 en correspondance à un trou de passage 215 au niveau du boîtier du groupe électrogène 40 de manière à permettre d'y fixer un cadenas antivol 300 : cf. figure 15. En variante, il peut s'agir d'une barre amovible apte à être maintenue devant l'emplacement 39 de manière à passer devant le groupe électrogène 40 dans l'emplacement 39, la barre étant cadenassable avec l'emplacement 39. Selon une autre variante, il peut d'agir d'une porte fermant l'emplacement 39 et verrouillable par une serrure à clé ou une serrure codée ou similaire.

La nacelle élévatrice peut comprendre un ou plusieurs guides d'amenée de câble(s), par exemple pour amener au niveau de l'emplacement 39 un câble de liaison de données et/ou un câble de connexion de puissance. Un tel guide d'amenée de câble a été représentée à la figure 9 uniquement pour un câble de connexion de puissance : cf. la référence 105. Le câble de connexion de puissance 105 est prévu pour connecter le groupe électrogène 40 au circuit électrique de puissance de la nacelle élévatrice, par exemple pour alimenter les chargeurs de la nacelle élévatrice. Un tableau électrique 220 du groupe électrogène 40 est pourvu à cet effet de la prise de puissance 83 déjà mentionnée en référence à la figure 5. Dans un autre mode de réalisation, le groupe électrogène 40 peut être prévu pour alimenter directement les moteurs électriques et autres circuits électriques de la nacelle élévatrice.

Le câble de liaison de données, s'il est prévu, sert à connecter l'électronique de bord 70 de la nacelle élévatrice 1 au groupe électrogène 40 lorsqu'il est dans l'emplacement 39. Le tableau électrique 220 peut présenter dans ce cas un connecteur 221 pour brancher le connecteur correspondant du câble de liaison de données de la nacelle élévatrice.

Les fonctionnalités de l'électronique de bord 70 de la nacelle élévatrice 1 vis-à-vis du groupe électrogène 40 ont déjà été évoquées plus haut en référence à la figure 5. De façon générale, il est avantageux que l'électronique de bord 70 puisse commander le groupe électrogène 40. Plus avantageusement encore, le groupe électrogène 40 peut être prévu pour être commandé exclusivement par l'électronique de bord 70. Autrement dit, le groupe électrogène 40 fonctionne alors uniquement en esclave de l'électronique de bord 70. Le groupe électrogène 40 est alors dépourvu d'organes de commande manuel ou similaire permettant de commander le groupe électrogène 40 indépendamment de l'électronique de bord 70, hormis éventuellement un bouton d'arrêt d'urgence et des dispositifs de protection tels que des fusibles automatiques. Le groupe électrogène 40 peut cependant être dépourvu aussi de bouton d'arrêt d'urgence, cette fonction à l'égard du groupe électrogène 40 pouvant également être gérée par l'électronique de bord 70 de la nacelle élévatrice.

Le tableau électrique 220 du groupe électrogène peut aussi être équipé d'autres prises. En particulier, il peut être équipé d'une prise monophasée 289 alimentée par le groupe électrogène 40. La prise 289 peut servir notamment au raccordement à une fiche correspondante d'un câble - non représenté - amené au niveau de l'emplacement 39 par le guide d'amenée de câble(s) 105. Il peut s'agir du câble équipé de la fiche 88 - cf. figure 5 - pour enfichage dans la prise 289. Il peut aussi s'agir du câble muni à son autre extrémité de la prise 89 : cf. aussi la figure 5.

Le tableau électrique 220 peut aussi être muni d'une prise 290 prévue pour le raccordement au secteur. Dans ce cas, le groupe électrogène 40 inclut préférentiellement un commutateur permettant de sélectivement alimenter la prise de puissance 83, soit par le groupe électrogène 40 lui-même, soit à partir de la prise 290 quand elle est raccordée au secteur. Ce commutateur est préférentiellement commandé par l'électronique de bord 70.

L'électronique de bord 70 peut aussi comprendre un module de communication sans fil et permettre par ce biais de commander à distance le groupe électrogène 40. En particulier, l'électronique de bord 70 peut être configurée pour permettre de démarrer à distance et/ou inhiber à distance le groupe électrogène 40 par le biais du module de communication sans fil.

Bien entendu, la présente invention n'est pas limitée aux exemples et au mode de réalisation décrits et représentés, mais elle est susceptible de nombreuses variantes accessibles à l'homme de l'art. Ainsi, elle peut être appliquée à des nacelles élévatrices ayant un mécanisme de levage de la plate-forme de travail d'un type différent. Il peut s'agir par exemple d'un bras télescopique articulé supportant à son extrémité supérieure la plate-forme de travail 3. Il peut aussi inclure dans ce cas une tourelle montée pivotante sur le châssis 1 autour d'un axe vertical laquelle supporte le bras télescopique. Dans ce dernier cas, les composants électriques et hydrauliques peuvent avantageusement être agencés sur la tourelle, exception faite du ou des moteurs M1 pour entraîner les roues avant et/ou arrière 10, 11. Dans ce cas, l'emplacement 39 pour le montage amovible du groupe électrogène 40 est préférentiellement agencé sur la tourelle.

## Revendications

1. Nacelle élévatrice apte à une utilisation tout-terrain en extérieur, comprenant :
- un châssis (1) muni d'au moins deux roues avant (10) et d'au moins deux roues arrière (11) permettant la translation de la nacelle élévatrice au sol,
- une plate-forme de travail (3),
- un mécanisme de levage (2) de la plate-forme de travail (3) lequel est monté sur le châssis (1),
- au moins un premier moteur électrique (M1) servant à fournir la puissance motrice pour déplacer la nacelle élévatrice au sol,
- au moins un deuxième moteur électrique (M2) servant à fournir la puissance motrice pour actionner le mécanisme de levage (2) de la plate-forme de travail (3),
- au moins une batterie électrique rechargeable (20) servant à alimenter l'au moins un premier et l'au moins un deuxième moteur électrique (M1, M2),
dans laquelle :
- la puissance motrice pour déplacer la nacelle élévatrice au sol est toujours fournie exclusivement par l'au moins un premier moteur électrique (M1), et
- la puissance motrice pour actionner le mécanisme de levage (2) de la plate-forme de travail (3) est toujours fournie exclusivement par l'au moins un deuxième moteur électrique (M2),
la nacelle élévatrice comprenant aussi :
- un pont avant (12) muni des deux roues avant (10) et un pont arrière (13) muni des deux roues arrière (11), l'un au moins des ponts étant un pont de transmission servant à transmettre la force motrice de l'au moins un premier moteur électrique (M1) aux roues correspondantes, et
- un emplacement (39) prévu pour le montage amovible d'un groupe électrogène (40),
**caractérisée en ce que** la nacelle élévatrice comprend en outre au moins un chargeur monophasé (31, 32, 33) servant à recharger l'au moins une batterie électrique rechargeable (20) par branchement à un réseau d'alimentation électrique monophasé et **en ce que** le groupe électrogène (40) est destiné à être branché à au moins l'un des chargeurs (31, 32, 33) pour recharger la batterie (20) lorsque le groupe électrogène est monté dans l'emplacement (39).

2. Nacelle élévatrice selon la revendication 1, comprenant trois emplacements (61, 62, 63) prévus chacun pour recevoir un chargeur monophasé respectif (31, 32, 33), la nacelle élévatrice étant en outre prévue pour pouvoir brancher chaque chargeur monophasé reçu dans un emplacement à une phase respective et à un neutre d'un réseau d'alimentation électrique triphasé de manière à pouvoir charger l'au moins une batterie électrique rechargeable (20) à partir du courant de deux ou trois phases du réseau d'alimentation électrique triphasé.

3. Nacelle élévatrice selon la revendication 2, dans laquelle un chargeur monophasé respectif est reçu dans deux des emplacements (61, 62, 63) ou dans les trois.

4. Nacelle élévatrice selon l'une quelconque des revendications 1 à 3, comprenant trois chargeurs monophasés (31, 32, 33) dimensionnés de manière à pouvoir charger l'au moins une batterie électrique rechargeable (20) à 80% de sa capacité en moins de 3 h lorsqu'ils sont branchés à un réseau d'alimentation triphasé approprié.

5. Nacelle élévatrice selon l'une quelconque des revendications 1 à 4, comprenant en outre un circuit hydraulique servant à actionner le mécanisme de levage (2) et comprenant au moins une pompe hydraulique (50), dans laquelle l'au moins un deuxième moteur électrique (M2) sert à entraîner l'au moins une pompe hydraulique (50), le circuit hydraulique comprenant de préférence une seule pompe hydraulique (50).

6. Nacelle élévatrice selon la revendication 5 dans laquelle :
- l'au moins une batterie électrique rechargeable (20), l'au moins un chargeur monophasé (31, 32, 33) et le cas échéant les trois emplacements (61, 62, 63) pour recevoir les chargeurs monophasés sont situés sur un premier côté latéral (G) du châssis (1) par rapport au mécanisme de levage (2), et
- l'au moins un deuxième moteur électrique (M2), l'au moins une pompe hydraulique (50) et l'emplacement (39) prévu pour le montage du groupe électrogène (40) sont situés sur un deuxième côté latéral (D) par rapport au mécanisme de levage (2), le deuxième côté latéral (D) étant de l'autre côté du châssis (2) par rapport au premier côté latéral (G).

7. Nacelle élévatrice selon l'une quelconque des revendications 1 à 6, dans laquelle le pont avant (12) et le pont arrière (13) constituent chacun un pont de transmission servant à transmettre la force motrice de l'au moins un premier moteur électrique (M1) aux roues correspondantes (10, 11).

8. Nacelle élévatrice selon l'une quelconque des revendications 1 à 7, comprenant un seul premier moteur électrique (M1) et/ou un seul deuxième moteur électrique (M2).

9. Nacelle élévatrice selon l'une quelconque des revendications 1 à 8, dans laquelle l'au moins un premier moteur électrique (M1) et/ou l'au moins un deuxième moteur électrique (M2) sont des moteurs à courant alternatif fonctionnant à une tension nominale inférieure ou égale à 70 VCA et plus préférentiellement inférieure ou égale à 50 VCA, la nacelle élévatrice comprenant au moins un onduleur (41 ; 42) servant à alimenter l'au moins un premier et/ou l'au moins un deuxième moteur électrique (M1, M2) à partir de l'au moins une batterie électrique rechargeable (20), la tension nominale de l'au moins une batterie électrique rechargeable (20) étant inférieure ou égale à 100 VCC et plus préférentiellement inférieure ou égale à 50 VCC.

10. Nacelle élévatrice selon l'une quelconque des revendications 1 à 9, comprenant un groupe électrogène (40) apte à être monté de manière amovible à l'emplacement (39) prévu à cet effet, et des moyens de raccordement électrique (34, 35) du groupe électrogène (40) à au moins l'un des chargeurs monophasés (31, 32, 33), le groupe électrogène (40) présentant de préférence un réservoir de carburant dont le volume permet de charger l'au moins une batterie électrique rechargeable (20) à au moins 50 % de sa capacité.

11. Nacelle élévatrice selon la revendication 10, comprenant une électronique de bord (70) prévue pour :
- identifier le type de groupe électrogène (40) et d'adapter la courbe de charge de l'au moins une batterie électrique rechargeable (20) en fonction du type de groupe électrogène identifié ; et/ou
- provoquer automatiquement la mise en route du groupe électrogène (40) lorsque le niveau de charge de l'au moins une batterie électrique rechargeable (20) passe en dessous d'un seuil prédéterminé.

12. Nacelle élévatrice selon l'une quelconque des revendications 1 à 11, comprenant une électronique de bord (70) configurée pour :
- limiter les pics de puissance absorbés par l'au moins un premier et l'au moins un deuxième moteur électrique (M2), et/ou
- limiter la puissance délivrée à l'au moins un premier moteur électrique (M1) et à l'au moins un deuxième moteur électrique (M2) en fonction d'au moins un paramètre de l'au moins une batterie électrique rechargeable (20) tel qu'un état de vieillissement de l'au moins une batterie électrique rechargeable (20) ou la température actuelle de l'au moins une batterie électrique rechargeable (20).

13. Nacelle élévatrice selon l'une quelconque des revendications 1 à 12, comprenant en outre une prise électrique monophasée (84) installée sur la plate-forme de travail (3), la nacelle élévatrice étant prévue pour alimenter la prise électrique monophasée par une ou plusieurs des possibilités suivantes :
- le branchement à un réseau d'alimentation électrique monophasé,
- l'alimentation par l'au moins une batterie électrique rechargeable (20) via un onduleur (22) dont est équipé la nacelle élévatrice, et
- l'alimentation par le groupe électrogène (40).

14. Nacelle élévatrice selon l'une quelconque des revendications 1 à 13, comprenant en outre une prise électrique triphasée (84) installée sur la plate-forme de travail (3), la nacelle élévatrice étant prévue pour alimenter la prise électrique triphasée par branchement à un réseau d'alimentation électrique triphasé ou par le groupe électrogène (40).

15. Nacelle élévatrice selon l'une quelconque des revendications 1 à 14, dans laquelle le mécanisme de levage de la plate-forme de travail est du type à ciseaux.

## Patentansprüche

1. Hubarbeitsbühne, für geländegängigen Einsatz im Freien fähig, umfassend:
- ein mit mindestens zwei Vorderrädern (10) und mindestens zwei Hinterrädern (11) versehenes Fahrgestell (1), das eine Translation der Hubarbeitsbühne am Boden ermöglicht,
- eine Arbeitsplattform (3),
- einen Hebemechanismus (2) der Arbeitsplattform (3), der am Fahrgestell (1) montiert ist,
- mindestens einen ersten Elektromotor (M1), der dazu dient, die Antriebsleistung zum Bewegen der Hubarbeitsbühne am Boden bereitzustellen,
- mindestens einen zweiten Elektromotor (M2), der dazu dient, die Antriebsleistung zum Betätigen des Hebemechanismus (2) der Arbeitsplattform (3) bereitzustellen,
- mindestens eine wiederaufladbare elektrische Batterie (20), die dazu dient, den mindestens einen ersten und den mindestens einen zweiten Elektromotor (M1, M2) mit Energie zu versorgen,
bei welcher:
- die Antriebsleistung zum Bewegen der Hubarbeitsbühne am Boden immer ausschließlich von dem mindestens einen ersten Elektromotor (M1) geliefert wird, und
- die Antriebsleistung zum Betätigen des Hebemechanismus (2) der Arbeitsplattform (3) immer ausschließlich von dem mindestens einen zweiten Elektromotor (M2) bereitgestellt wird,
die Hubarbeitsbühne ferner umfassend:
- eine Vorderachse (12), die mit den beiden Vorderrädern (10) versehen ist, und eine Hinterachse (13), die mit den beiden Hinterrädern (11) versehen ist, wobei mindestens eine der Achsen eine Transmissionsachse ist, die dazu dient, die Antriebskraft des mindestens einen ersten Elektromotors (M1) auf die entsprechenden Räder zu übertragen, und
- einen Platz (39), der für die abnehmbare Montage eines Stromaggregats (40) vorgesehen ist,
**dadurch gekennzeichnet, dass** die Hubarbeitsbühne ferner mindestens ein einphasiges Ladegerät (31, 32, 33) umfasst, das dazu dient, die mindestens eine wiederaufladbare elektrische Batterie (20) durch Anschluss an ein einphasiges Stromversorgungsnetz aufzuladen, und dass das Stromaggregat (40) dazu bestimmt ist, an mindestens eines der Ladegeräte (31, 32, 33) angeschlossen zu werden, um die Batterie (20) aufzuladen, wenn das Stromaggregat am Platz (39) montiert ist.

2. Hubarbeitsbühne nach Anspruch 1, umfassend drei Plätzen (61, 62, 63), die jeweils zur Aufnahme eines jeweiligen einphasigen Ladegeräts (31, 32, 33) vorgesehen sind, wobei die Hubarbeitsbühne ferner dazu vorgesehen ist, jedes in einem Platz aufgenommene einphasige Ladegerät an eine jeweilige Phase und einen Neutralleiter eines dreiphasigen Stromversorgungsnetzes anschließen zu können, so dass die mindestens eine wiederaufladbare elektrische Batterie (20) aus dem Strom von zwei oder drei Phasen des dreiphasigen Stromversorgungsnetzes geladen werden kann.

3. Hubarbeitsbühne nach Anspruch 2, bei welcher ein jeweiliges einphasiges Ladegerät an zwei der Plätze (61, 62, 63) oder in allen drei Plätzen aufgenommen ist.

4. Hubarbeitsbühne nach einem der Ansprüche 1 bis 3, umfassend drei einphasige Ladegeräte (31, 32, 33), dimensioniert, um mindestens eine wiederaufladbare elektrische Batterie (20) in weniger als 3 St auf 80% ihrer Kapazität aufladen zu können, wenn sie an ein geeignetes dreiphasiges Stromersorgungsnetz angeschlossen sind.

5. Hubarbeitsbühne nach einem der Ansprüche 1 bis 4, ferner umfassend einen Hydraulikkreis, der zum Betätigen des Hebemechanismus (2) dient und mindestens eine Hydraulikpumpe (50) umfasst, wobei der mindestens einen zweiten Elektromotor (M2) zum Antreiben der mindestens einen Hydraulikpumpe (50) dient, wobei der Hydraulikkreis vorzugsweise eine einzige Hydraulikpumpe (50) umfasst.

6. Hubarbeitsbühne nach Anspruch 5, bei welcher:
- die mindestens eine wiederaufladbare elektrische Batterie (20), das mindestens eine einphasige Ladegerät (31, 32, 33) und gegebenenfalls die drei Plätze (61, 62, 63) zur Aufnahme der einphasigen Ladegeräte an einer ersten Lateralseite (G) des Fahrgestells (1) in Bezug auf den Hebemechanismus (2) angeordnet sind, und
- der mindestens einen zweiten Elektromotor (M2), die mindestens eine Hydraulikpumpe (50) und der für die Montage des Stromaggregats (40) vorgesehene Platz (39) an einer zweiten Lateralseite (D) in Bezug auf den Hebemechanismus (2) angeordnet sind, wobei sich die zweite Lateralseite (D) in Bezug auf die erste Lateralseite (G) auf der anderen Seite des Fahrgestells (2) befindet.

7. Hubarbeitsbühne nach einem der Ansprüche 1 bis 6, wobei die Vorderachse (12) und die Hinterachse (13) jeweils eine Antriebsachse bilden, die dazu dienen, die Antriebskraft des mindestens einen ersten Elektromotors (M1) auf die entsprechenden Räder (10, 11) zu übertragen.

8. Hubarbeitsbühne nach einem der Ansprüche 1 bis 7, umfassend nur einem ersten Elektromotor (M1) und/oder nur einem zweiten Elektromotor (M2).

9. Hubarbeitsbühne nach einem der Ansprüche 1 bis 8, bei welcher der mindestens eine erste Elektromotor (M1) und/oder der mindestens eine zweite Elektromotor (M2) Wechselstrommotoren, mit einer Nennspannung von 70 VAC oder weniger und bevorzugter 50 VAC oder weniger betrieben, sind, wobei die Hubarbeitsbühne mindestens einen Wechselrichter (41 ; 42) umfasst, der dazu dient, den mindestens einen ersten und/oder den mindestens einen zweiten Elektromotor (M1, M2) aus der mindestens einen wiederaufladbaren elektrischen Batterie (20) zu versorgen, wobei die Nennspannung der mindestens einen wiederaufladbaren elektrischen Batterie (20) kleiner oder gleich 100 VDC und bevorzugter kleiner oder gleich 50 VDC ist.

10. Hubarbeitsbühne nach einem der Ansprüche 1 bis 9, umfassend ein Stromaggregat (40), fähig zur abnehmbaren Montage an dem dafür vorgesehenen Platz (39), und Mittel (34, 35) zum elektrischen Anschluss des Stromaggregats (40) an mindestens eines der einphasigen Ladegeräte (31, 32, 33), wobei das Stromaggregat (40) vorzugsweise einen Kraftstofftank aufweist, dessen Volumen es ermöglicht, die mindestens eine wiederaufladbare elektrische Batterie (20) auf mindestens 50 % ihrer Kapazität aufzuladen.

11. Hubarbeitsbühne nach Anspruch 10, umfassend eine Bordelektronik (70), vorgesehen um:
- den Typ des Stromaggregats (40) zu identifizieren und die Ladekurve der mindestens einen wiederaufladbaren elektrischen Batterie (20) in Abhängigkeit vom identifizierten Typ des Stromaggregats anzupassen; und/oder
- automatisch das Einschalten des Stromaggregats (40) zu bewirken, wenn der Ladezustand der mindestens einen wiederaufladbaren elektrischen Batterie (20) unter einen vorbestimmten Schwellenwert fällt.

12. Hubarbeitsbühne nach einem der Ansprüche 1 bis 11, umfassend eine Bordelektronik (70), eingerichtet, um:
- Leistungsspitzen, die von dem mindestens einen ersten und dem mindestens einen zweiten Elektromotor (M2) aufgenommen werden zu begrenzen, und/oder
- die an den mindestens einen ersten Elektromotor (M1) und den mindestens einen zweiten Elektromotor (M2) abgegebene Leistung in Abhängigkeit von mindestens einem Parameter der mindestens einen wiederaufladbaren elektrischen Batterie (20), wie beispielsweise einem Alterungszustand der mindestens einen wiederaufladbaren elektrischen Batterie (20) oder der aktuellen Temperatur der mindestens einen wiederaufladbaren elektrischen Batterie (20), zu begrenzen.

13. Hubarbeitsbühne nach einem der Ansprüche 1 bis 12, ferner umfassend eine einphasige Steckdose (84), die an der Arbeitsplattform (3) installiert ist, wobei die Hubarbeitsbühne dazu vorgesehen ist, die einphasige Steckdose durch eine oder mehrere der folgenden Möglichkeiten mit Strom zu versorgen:
- Anschluss an ein einphasiges Stromversorgungsnetz,
- die Versorgung durch die mindestens eine wiederaufladbare elektrische Batterie (20) über einen Wechselrichter (22), mit dem die Hubarbeitsbühne ausgestattet ist, und
- die Versorgung durch das Stromaggregat (40).

14. Hubarbeitsbühne nach einem der Ansprüche 1 bis 13, ferner umfassend eine dreiphasige Steckdose (84), die an der Arbeitsplattform (3) installiert ist, wobei die Hubarbeitsbühne dazu vorgesehen ist, die dreiphasige Steckdose durch Anschluss an ein dreiphasiges Stromversorgungsnetz oder durch das Stromaggregat (40) mit Strom zu versorgen.

15. Hubarbeitsbühne nach einem der Ansprüche 1 bis 14, wobei der Hebemechanismus der Arbeitsplattform vom Scherentyp ist.

## Claims

1. An aerial work platform suitable for all-terrain outdoor use, comprising:
- a frame (1) equipped with at least two front wheels (10) and at least two rear wheels (11) allowing the translation of the aerial work platform along the ground,
- a working platform (3),
- a lifting mechanism (2) for the working platform (3), which is mounted on the frame (1),
- at least one first electric motor (M1) for providing the driving power to move the aerial work platform along the ground,
- at least one second electric motor (M2) for providing the driving power to operate the lifting mechanism (2) of the working platform (3),
- at least one rechargeable electric battery (20) for powering the at least one first and the at least one second electric motor (M1, M2),
wherein:
- the driving power for moving the aerial work platform along the ground is always provided exclusively by the at least one first electric motor (M1), and
- the driving power for actuating the lifting mechanism (2) of the work platform (3) is always provided exclusively by the at least one second electric motor (M2),
the aerial work platform comprising also:
- a front axle (12) equipped with the two front wheels (10) and a rear axle (13) equipped with the two rear wheels (11), at least one of the axles being a transmission axle for transmitting the driving force of the at least one first electric motor (M1) to the corresponding wheels, and
- a location (39) provided for the mounting in a removable manner of a power generator (40),
**characterized in that** the aerial work platform further comprises at least one single-phase charger (31, 32, 33) for recharging the at least one rechargeable electric battery (20) by connection to a single-phase power supply network and **in that** the power generator (40) is intended to be connected to at least one of the chargers (31, 32, 33) to recharge the battery (20) when the power generator is mounted in the location (39) .

2. The aerial work platform according to claim 1, comprising three locations (61, 62, 63) each provided for receiving a respective single-phase charger (31, 32, 33), the aerial work platform being further provided to be able to connect each single-phase charger received in a location to a respective phase and to a neutral of a three-phase power supply network so as to be able to charge the at least one rechargeable electrical battery (20) from the current of two or three phases of the three-phase power supply network.

3. The aerial work platform of claim 2, wherein a respective single-phase charger is received in two of the locations (61, 62, 63) or in all three.

4. The aerial work platform according to any one of claims 1 to 3, comprising three single-phase chargers (31, 32, 33) dimensioned so as to be able to charge the at least one rechargeable electric battery (20) to 80% of its capacity in less than 3 hours when connected to a suitable three-phase power supply network.

5. The aerial work platform according to any one of claims 1 to 4, further comprising a hydraulic circuit for operating the lifting mechanism (2) and comprising at least one hydraulic pump (50), wherein the at least one second electric motor (M2) serves to drive the at least one hydraulic pump (50), the hydraulic circuit preferably comprising a single hydraulic pump (50).

6. The aerial work platform according to claim 5 wherein:
- the at least one rechargeable electric battery (20), the at least one single-phase charger (31, 32, 33) and if applicable the three locations (61, 62, 63) for receiving the single-phase chargers are located on a first lateral side (G) of the frame (1) with respect to the lifting mechanism (2), and
- the at least one second electric motor (M2), the at least one hydraulic pump (50) and the location (39) for mounting the power generator (40) are located on a second lateral side (D) with respect to the lifting mechanism (2), the second lateral side (D) being on the other side of the frame (2) with respect to the first lateral side (G).

7. The aerial work platform according to any one of claims 1 to 6, wherein the front axle (12) and the rear axle (13) each constitute a transmission axle for transmitting the driving force of the at least one first electric motor (M1) to the corresponding wheels (10, 11) .

8. The aerial work platform according to any one of claims 1 to 7, comprising a single first electric motor (M1) and/or a single second electric motor (M2).

9. The aerial work platform according to any one of claims 1 to 8, wherein the at least one first electric motor (M1) and/or the at least one second electric motor (M2) are AC motors operating at a nominal voltage less than or equal to 70 VAC and more preferably less than or equal to 50 VAC, the aerial work platform comprising at least one inverter (41; 42) for supplying the at least one first and/or the at least one second electric motor (M1, M2) from the at least one rechargeable electric battery (20), the rated voltage of the at least one rechargeable electric battery (20) being less than or equal to 100 VDC and more preferably less than or equal to 50 VDC.

10. The aerial work platform according to any one of claims 1 to 9, comprising a power generator (40) suitable for being removably mounted at the location (39) provided to that effect, and means (34, 35) for electrically connecting the power generator (40) to at least one of the single-phase chargers (31, 32, 33), the power generator (40) preferably having a fuel tank, the volume of which makes it possible to charge the at least one rechargeable electric battery (20) to at least 50% of its capacity.

11. The aerial work platform according to claim 10, comprising on-board electronics (70) provided for:
- identifying the type of power generator (40) and adapting the charging curve of the at least one rechargeable electric battery (20) as a function of the identified type of power generator; and/or
- automatically causing the power generator (40) to start when the charge level of the at least one rechargeable electric battery (20) falls below a predetermined threshold.

12. The aerial work platform according to any one of claims 1 to 11, comprising on-board electronics (70) configured to:
- limit the power peaks absorbed by the at least one first and the at least one second electric motor (M2), and/or
- limit the power delivered to the at least one first electric motor (M1) and to the at least one second electric motor (M2) as a function of at least one parameter of the at least one rechargeable electric battery (20) such as an ageing state of the at least one rechargeable electric battery (20) or the current temperature of the at least one rechargeable electric battery (20).

13. The aerial work platform according to any one of claims 1 to 12, further comprising a single-phase electrical outlet (84) installed on the working platform (3), the aerial work platform being provided to supply the single-phase electrical outlet by one or more of the following possibilities:
- connection to a single-phase power supply network,
- supply by the at least one rechargeable electric battery (20) via an inverter (22) with which the aerial work platform is equipped, and
- supply by the power generator (40).

14. The aerial work platform according to any one of claims 1 to 13, further comprising a three-phase electrical outlet (84) installed on the working platform (3), the aerial work platform being provided to supply the three-phase electrical outlet by connection to a three-phase electrical supply network or by the power generator (40) .

15. The aerial work platform according to any one of claims 1 to 14, wherein the lifting mechanism of the working platform is of the scissor type.
